(19) **Europäisches Patentamt / European Patent Office / Office européen des brevets**

(11) **EP 1 647 087 B1**

(12) **EUROPÄISCHE PATENTSCHRIFT**

(45) Veröffentlichungstag und Bekanntmachung des Hinweises auf die Patenterteilung:
**21.02.2007 Patentblatt 2007/08**

(21) Anmeldenummer: **04764471.1**

(22) Anmeldetag: **25.08.2004**

(51) Int Cl.:
*H02M 3/156* (2006.01)  *H02M 3/157* (2006.01)

(86) Internationale Anmeldenummer:
**PCT/EP2004/009495**

(87) Internationale Veröffentlichungsnummer:
**WO 2005/022735 (10.03.2005 Gazette 2005/10)**

(54) **STEUERUNGSVORRICHTUNG ZUM STEUERN EINES LADESCHALTERS IN EINEM SCHALTREGLER UND VERFAHREN ZUM STEUERN EINES LADESCHALTERS**

CONTROL DEVICE FOR CONTROLLING A CHARGING SWITCH IN A SWITCHING CONTROLLER AND METHOD FOR CONTROLLING A CHARGING SWITCH

DISPOSITIF DE COMMANDE SERVANT A COMMANDER UN COMMUTATEUR DE CHARGE DANS UN REGULATEUR A DECOUPAGE ET PROCEDE POUR COMMANDER UN COMMUTATEUR DE CHARGE

(84) Benannte Vertragsstaaten:
**AT BE BG CH CY CZ DE DK EE ES FI FR GB GR HU IE IT LI LU MC NL PL PT RO SE SI SK TR**

(30) Priorität: **27.08.2003 DE 10339482**
**29.01.2004 DE 102004004540**

(43) Veröffentlichungstag der Anmeldung:
**19.04.2006 Patentblatt 2006/16**

(73) Patentinhaber: **Fraunhofer-Gesellschaft zur Förderung der angewandten Forschung e.V. 80686 München (DE)**

(72) Erfinder:
• **HACKNER, Michael 92331 Parsberg (DE)**

• **ERNST, Roland 91052 Erlangen (DE)**
• **HOHE, Hans-Peter 91332 Heiligenstadt (DE)**

(74) Vertreter: **Zinkler, Franz et al Schoppe, Zimmermann, Stöckeler & Zinkler Postfach 246 82043 Pullach bei München (DE)**

(56) Entgegenhaltungen:
**WO-A-02/052691**   **US-A- 4 318 165**
**US-A- 5 625 538**   **US-B1- 6 465 993**

**Beschreibung**

Die vorliegende Erfindung bezieht sich auf Schaltregler und insbesondere auf das Steuern eines Ladeschalters eines Schaltreglers mit einer Induktivität, einer Siebkapazität und einer Diode.

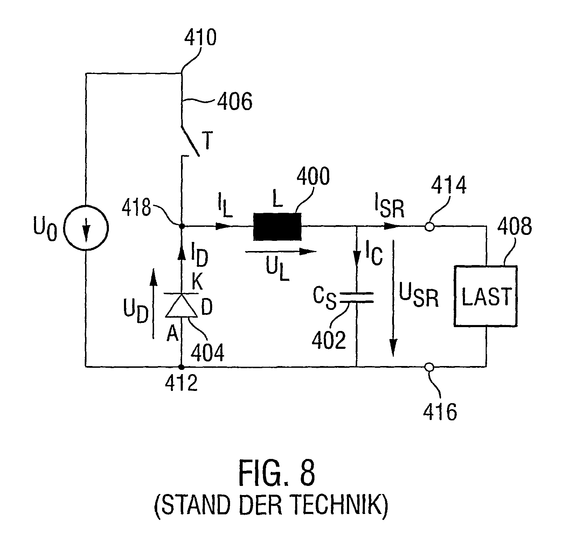

Fig. 8 zeigt einen bekannten Abwärts-Wandler mit einem einfachen Schalter, wie er beispielsweise in "Halbleiterschaltungstechnik" U. Tietze, C.H. Schenk, Springer-Verlag, 9. Auflage, 1989, Abbildung 18.37 auf Seite 564 gezeigt ist. Der Abwärts-Wandler in Fig. 8 umfasst eine ringartige Verschaltung mit einer Spule 400, einem Kondensator 402 und einer Diode 404. Der Abwärts-Wandler bzw. Schaltregler in Fig. 8 umfasst ferner einen Ladeschalter 406 sowie eine in Fig. 8 nicht gezeigte Steuerung, die ausgebildet ist, um den Ladeschalter 406 so zu steuern, dass die Ausgangsspannung des Schaltreglers, die in Fig. 8 mit $U_{SR}$ bezeichnet ist, auf einem definierten Niveau zu halten bzw. in einem Bereich um das definierte Niveau herum zu halten.

Die in Fig. 8 gezeigte Schaltung umfasst eine bestimmte Anzahl von Knoten, die nachfolgend dargelegt werden. An einem ersten Eingangsknoten 410 der Schaltung wird ein Pol einer Eingangsspannungsquelle $U_0$ angeschlossen, während an einem zweiten Eingangsknoten 412 ein anderes Potential der Eingangquelle $U_0$ angeschlossen wird. Der zweite Eingangsknoten 412 ist typischerweise der Masseknoten. Ein erster Ausgangsknoten 414 wird auch als erste Ausgangsschiene oder positive Ausgangsschiene bezeichnet, während ein zweiter Ausgangsknoten 416 auch als zweite Ausgangsschiene bzw. negative Ausgangsschiene bezeichnet wird, wenn die in Fig. 8 gezeigte Konventioh für die Ausgangsspannung des Schaltreglers $U_{SR}$ verwendet wird. Der Schalter 406 ist einerseits zwischen den ersten Eingangsknoten 410 und einen ersten Zwischenknoten 418 geschaltet. Ferner ist die Diode 404 so zwischen den ersten Zwischenknoten 418 und den zweiten Eingangsknoten 412 geschaltet, dass die Anode der Diode mit dem zweiten Eingangsknoten 412 verbunden ist, während die Kathode der Diode mit dem ersten Zwischenknoten 418 verbunden ist. Ferner ist, wie es in Fig. 8 gezeigt ist, der Kondensator 402 zwischen den ersten Ausgangsknoten 414 und den zweiten Ausgangsknoten 416 geschaltet. Gemäß der in Fig. 8 gezeigten Konfiguration des Netzwerkes aus Diode, Spule und Kondensator ist die Spule zwischen den ersten Zwischenknoten 418 und den ersten Ausgangsknoten 414 geschaltet.

Nachfolgend wird auf die Funktionalität der in Fig. 8 gezeigten Schaltung eingegangen. So lange der Schalter 406 geschlossen ist, wird $U_D$ gleich der negativen Eingangsspannung $U_0$. Wenn er sich öffnet, behält der Drosselstrom $I_L$ seine Richtung bei, und $U_D$ sinkt betragsmäßig ab, bis die Diode leitend wird, also ungefähr auf 0-Potential. Der zeitliche Verlauf des Spulenstroms ergibt sich aus dem Induktionsgesetz, gemäß dem die Spannung an der Spule gleich dem Produkt aus der Induktivität L der Spule und der Ableitung des Spulenstroms nach der Zeit ist. Während der Einschaltzeit, also wenn die Eingangsspannung $U_0$ an der Diode 404 anliegt, liegt an der Drossel die Spannung $U_0$ - $U_{SR}$ an. Während der Ausschaltzeit $t_{aus}$ des Schalters 406 liegt an der Drossel die Spannung $U_L = -U_{SR}$ an. Daraus ergibt sich eine betragsmäßige Stromänderung $\Delta I_L$, die folgendermaßen gegeben ist:

$$\Delta I_L = 1/L \cdot (-U_{SR}) \cdot \Delta t_{aus} = 1/L \ (U_0 - U_{SR}) \ t_{ein}$$

Aus dieser Bilanz lässt sich wiederum die Ausgangsspannung berechnen, die folgendermaßen definiert ist:

$$U_{SR} = [t_{ein}/(t_{ein} + t_{aus})] \cdot U_0 = t_{ein}/T \cdot U_0 = p \cdot U_0.$$

In der vorstehenden Gleichung ist $T = t_{ein} + t_{aus} = 1/F$ die Schwingungsdauer, und $p = t_{ein}/T$ ist das sogenannte Tastverhältnis. Es ist zu sehen, dass sich als Ausgangsspannung erwartungsgemäß der arithmetische Mittelwert von $U_D$ ergibt. Typischerweise wird die Induktivität L der Spule 400 so gewählt, dass ein Minimalstrom nicht unterschritten wird, wie es in der Technik bekannt ist. Ferner ist bekannt, dass mit Erhöhung der Taktfrequenz die Induktivität verkleinert werden kann. Ferner steigt bei zu hohen Frequenzen der Aufwand für den Schalttransistor und die Ansteuerschaltung. Außerdem nehmen dynamische Schaltverluste proportional zur Frequenz zu.

Der Kondensator 402 bestimmt die Welligkeit der Ausgangsspannung. Die Erzeugung des Schaltsignals zum Schalten des Lade-Transistors 406 erfolgt üblicherweise durch einen Impulsbreitenmodulator und einen Regler mit Spannungsreferenz. Im einzelnen wird eine Referenzspannung, die einen Sollwert liefert, einem Subtrahierer zugeführt, dem auch die aktuelle Ausgangsspannung $U_{SR}$ als Ist-Wert zugeführt wird. Das Ausgangssignal des Subtrahierers wird einem Regelverstärker zugeführt, der einen Komparator speist, in den andererseits ein von einem Sägezahngenerator erzeugtes Signal zugeführt wird. Das Ausgangssignal des Komparators ist das Steuersignal für den Schalter 406 in Fig. 8. Typischerweise ist der Regelverstärker ein PI-Regelverstärker. Er erhöht sein Ausgangssignal so lange, bis die Differenz am Ausgang des Subtrahierers zu 0 wird, bis also die Ausgangsspannung $U_{SR}$ gleich der Soll-Ausgangsspannung ist. Typische Größenordnungen für die Dimensionierung der Spule sind im Milli-Henry-Bereich (z. B. 2,7 mH), während typische Werte für Kondensatoren im dreistelligen Mikro-Farad-Bereich (z. B. 100 µF) liegen, wenn Schaltfrequenzen im Bereich von 50 kHz verwendet werden.

In Fig. 8 gezeigte Schaltregler sollen eine geeignete Spannungsversorgung an eine nachfolgend angeschlossene Schaltung, wie beispielsweise einen ASIC, liefern. Die Spannungsversorgung besteht in der Regel aus einer oder mehreren konstanten Gleichspannungen von beispielsweise +5 V oder ±15 V. Oft steht diese nicht von vorneherein in der gewünschten Form zur Verfügung und muss erst durch beispielsweise einen in Fig. 8 gezeigten Schaltregler, der durch einen nachgeschalteten Linearregler ergänzt werden kann, um die Welligkeit der Ausgangsspannung zu beseitigen, erzeugt werden. Eingangsseitig an dem in Fig. 8 gezeigten Schaltregler liegt üblicherweise ein Gleichrichter vor, der aus dem Wechsel- bzw. Drehstromnetz (230 V bzw. 400 V) der E-lektrizitätswerke die Eingangsspannung $U_0$ erzeugt.

So existieren abweichend von dem in Fig. 8 gezeigten Schaltregler auch andere Regler mit einem Transformator, einem Gleichrichter, einem Glättungs-Kondensator und eventuell einem Linearregler zur Spannungs-Stabilisierung. Allerdings ist der Transformator aufwendig herzustellen und damit teuer. Ferner benötigt er viel Platz. Ein weiterer Nachteil des Transformators besteht in seinem frequenzabhängigen Arbeitsbereich. Dieser ist z. B. auf die Netzfrequenz von 50 Hz bzw. 60 Hz eingeschränkt. Weicht die Frequenz ab, dann hat dies auch eine Abweichung der Ausgangsspannung des Transformators zur Folge. Bei einer Gleichspannung am Eingang funktioniert die Spannungs-Übertragung nicht.

Läßt man den Transformator weg und verwendet nur Gleichrichter, Glättungskondensator und einen Linearregler, dann geht viel Energie in Form von Wärme verloren. Außerdem muss dann für eine ausreichende Kühlung des Linearreglers gesorgt werden, die wiederum sehr aufwendig ist und Platz braucht. Dies alles wird dadurch umgangen, wenn man, wie es anhand von Fig. 8 dargestellt worden ist, anstelle des Linearreglers einen Schaltregler verwendet. Durch den deutlich besseren Wirkungsgrad geht wenig Energie in Form von Wärme verloren und folglich ist der Aufwand für die Kühlung deutlich geringer. Der Schaltregler benötigt, wie es ausgeführt worden ist, eine Drossel (die Induktivität 400 in Fig. 8), die relativ aufwendig in der Herstellung ist. Diese hat jedoch nur eine Wicklung und ist damit einfacher herzustellen als ein Transformator, der zwei Wicklungen besitzt. Außerdem kann die Drossel durch Wahl einer höheren Arbeits-Frequenz verkleinert werden, was auch bei Transformatoren funktioniert.

Viele bekannte Schalt-Netzteile, so auch das in Fig. 8 gezeigte Schaltnetzteil sind in bestimmter Hinsicht problematisch. Üblicherweise ist der Eingangsspannungs-Bereich auf ein Verhältnis von $U_{E,max}/U_{E,min} \leq 5$ beschränkt, was aus den Katalogen verschiedener Hersteller zu sehen ist. Dieser Bereich ist für manche Anwendungen zu gering und sollte erhöht werden, und zwar auf ein Verhältnis von z. B. 20:1.

Die Spannungsversorgung des Reglers selbst erfolgt entweder über eine separate Spannungsquelle oder wird aus der Eingangsspannung erzeugt, was einen zusätzlichen Spannungsregler und damit zusätzlichen Aufwand bedeutet.

Ferner wird für einen flexiblen Einsatz angestrebt, die Eingangsspannung deutlich größer wählen zu können, als die maximale zulässige Betriebsspannung des Reglers selbst, ohne dass zusätzliche Spannungs-Regler für die Erzeugung dieser Betriebsspannung verwendet werden.

Außerdem sollte bei Anlegen der Eingangsspannung ein möglichst schnelles, kontrolliertes Anlaufen des Schaltreglers gewährleistet sein. Insbesondere für zeitkritische Anwendungen sollte diese sogenannte Anlauf-Verzögerung so klein als möglich sein.

Der in Fig. 8 gezeigte Schaltregler vom Abwärtswandlertyp, der in der Technik auch als Tiefsetzsteller bezeichnet wird, beruht, wie es ausgeführt worden ist, darauf, dass der Ladeschalter 406 eingeschaltet wird, um den positiven Ausgangsknoten 414 gegenüber dem negativen Ausgangsknoten 416 zu laden, und um dann den Schalter wieder auszuschalten, also zu öffnen, damit die Ausgangsspannung nicht einen Sollwertbereich, der durch den Mittelwert der letztendlich resultierenden Ausgangsspannung $U_{SR}$ bestimmt ist, übersteigt. Möglichkeiten der Regelung des Schalters bestehen prinzipiell darin, die Ausgangsspannung zu filtern, um einen Mittelwert der Ausgangsspannung ohne Welligkeit zu erhalten, und um dann den Ladeschalter auf der Basis der gefilterten Ausgangsspannung durch einen Soll/Ist-Vergleich zu steuern. Alternativ besteht ebenfalls die Möglichkeit, den Schaltregler auf der Basis des durch die Spule 400 fließenden Stroms zu regeln, da der durch die Spule 400 fließende Strom in Zusammenhang mit der Ausgangsspannung steht, da die Ausgangsspannung durch Laden des Knoten 414 des Kondensators 402 gesteuert wird. So existieren auch Stromregler, die den Strom durch die Spule 400 erfassen, den Stromwert filtern, um einen mittleren Stromwert zu erhalten, und die dann auf der Basis eines Soll/Ist-Vergleichs aufgrund des gefilterten Strom-Mittelwerts den Ladeschalter 406 steuern.

US-B1-8465993 offenbart eine Steuerungsvorrichtung zum Steuern eines Ladeschalters. Bei US-B1-6465993, das Spannungserfassungssignal oder das Fehlersignal gefilterte Gleichsignale sind. Ferner wird bei US-B1-6465993 zwar die Ausgangsspannung erfaßt, und wird ferner der Strom durch die Spule erfaßt.

Verschiedene Regelungskonzepte sind in der DE 19814681 A1, der DE 19505417 A1, der DE 19933039, der EP 0 759 653 oder der EP 0 664 596 beschrieben. So zeigt beispielsweise die DE 19814681 A1 einen Current-Mode-Schaltregler mit einer ersten Regeleinrichtung zur Spannungsregelung und einer zweiten Reglereinrichtung zur Laststromregelung, die jeweils zwei Eingänge und jeweils einen Ausgang aufweisen, wobei einem ersten Eingang der ersten Reglereinrichtung ein Referenzsignal und einem zweiten Eingang als Regelgröße ein Ausgangssignal des Current-Mode-Schaltreglers zuführbar ist, und wobei der Ausgang der ersten Reglereinrichtung mit einem ersten Eingang der zweiten Reglereinrichtung gekoppelt ist. Ferner ist ein durch ein Steuersignal der zweiten Reglereinrichtung steuerbarer Leistungsschalter vorgesehen, dessen Laststrecke zwischen einem ersten Pol mit einem ersten Versorgungspotential und einem zweiten Pol mit einem zweiten Versorgungspotential angeordnet ist. In Reihe zu dieser Laststrecke ist eine Drosseleinrichtung angeordnet. Ferner ist ein Integrator vorgesehen, der durch zeitliche Integration der an der Drosseleinrichtung abfallenden Drosselspannung ein einen Laststrom abbildendes Regelsignal erzeugt, das als Regelgröße in einen zweiten Eingang der zweiten Reglereinrichtung eingekoppelt wird. Durch den Integrator wird die an der Drosselinduktivität abfallende Spannung über die Zeit aufintegriert, um den Strom durch die Drossel zu erfassen.

Die DE 19933039 A1 offenbart eine Vorrichtung zur Erzeugung eines Regelsignals für einen Gleichspannungswandler. Die Vorrichtung zur Erzeugung des Regelsignals umfasst einen Spannungsregler und einen Stromregler. Zwischen dem Spannungsregler und dem Stromregler ist ein Begrenzer vorgesehen, der zur Begrenzung des Ausgangssignals des Spannungsreglers dient. Der Begrenzer umfasst einen Eingangsanschluss, über den ihm ein vorgebbares Grenzwertsignal für den Stromsollwert eingebbar ist.

Problematisch an Sollwertreglern, die mit einem festen Sollwert arbeiten, ist, dass dieser Sollwert mit einem Istwert verglichen werden muss. Üblicherweise liegt der Sollwert als fester Wert, also gewissermaßen als Gleichsignal vor, während der Istwert ständig schnell schwankt, was eine inhärente Eigenschaft des Schaltreglers ist, da die Welligkeit der Ausgangsspannung genauso wie die Welligkeit des Ausgangsstroms systembedingt durch Öffnen und Schließen des Ladeschalters entsteht. Daher muss bei diesen bekannten Reglerkonzepten ein Istwert entweder der Spannung oder des Stroms gefiltert werden, um einen gefilterten Istwert zu erhalten, der eine Gleichspannungscharakteristik hat, derart, dass überhaupt ein Soll/Ist-Vergleich mit dem in "Gleichspannungscharakteristik" vorliegenden Sollwert durchführbar ist.

Durch dieses Filtern wird innerhalb der Regelschleife eine zusätzliche Zeitkonstante eingeführt. Außerdem ergibt sich die Problematik, dass die Stromregelschleife bei größeren Pulsweitenverhältnissen instabil wird. Typischerweise laufen bekannte Stromregelschleifen nur stabil bis zu einem Pulsweitenverhältnis von 50%. Bei größeren Pulsweitenverhältnissen wird ein solcher Schaltregler instabil. Dies bedeutet, dass eine Änderung der Ausgangsspannung nicht mehr vernünftig kompensiert werden kann. Zur Verhinderung dieser Instabilität bereits bei einem Pulsweitenverhältnis von 50%, also zum Erhöhen des Pulsweitenverhältnisbereichs über 50%, werden üblicherweise Schaltungen vorgesehen, beispielsweise Schaltungen, die dem durch den Spannungsregler vorgegebenen Strom-Grenzwert eine sägezahnförmige Spannung überlagern, um diesem Instabilitätseffekt entgegenzuwirken. Dadurch kann eine Stromregelschleife auch für Pulsweitenverhältnisse größer als 50% stabilisiert werden. Dies bedeutet jedoch einen erhöhten Schaltungsaufwand, da der Sägezahnverlauf erzeugt und dem Stromsollwert überlagert werden muss. Des weiteren darf auch der Schaltungsaufwand für das Filter zum Filtern des aktuellen Strom-Istwertverlaufs nicht unberücksichtigt bleiben. Bekannte Konzepte sind daher doppelt nachteilig, da sie ein Filter zum Filtern des Strom-Istwert-Verlaufs benötigen, und ferner teilweise bedingt durch dieses Filter auch eine Stabilisierungsschaltung benötigen, um Pulsbreitenverhältnisse größer als 50% zu realisieren.

Diese zusätzlichen Schaltungsteile führen dazu, dass Schaltregler insbesondere dann, wenn sie integrierbar ausgeführt sein sollen, teurer werden, was nicht zuletzt auch darauf zurückzuführen ist, dass jegliche zusätzliche Komponente bei einer integrierten Schaltung die Ausschusswahrscheinlichkeit für die gesamte integrierte Schaltung erhöht.

Auch wenn ein solcher bekannter Schaltregler nicht in integrierter Ausführung ausgeführt wird, müssen die zusätzlichen Schaltungsteile dennoch entworfen und realisiert werden, was zu Kostenerhöhungen führen kann.

Die Aufgabe der vorliegenden Erfindung besteht darin, ein Konzept zum Steuern eines Ladeschalters in einem Schaltregler zu schaffen, das durch einen reduzierten Schaltungsaufwand realisierbar ist.

Diese Aufgabe wird durch eine Steuerungsvorrichtung nach Patentanspruch 1, ein Verfahren nach Patentanspruch 16, ein auf einem Computer ablaufendes Programm nach Patentanspruch 17 oder einen Schaltregler nach Patentanspruch 18 gelöst. Bevorzugte Ausführungbeispiele werden in den abhängigen Ansprüchen definiert.

Der vorliegenden Erfindung liegt die Erkenntnis zugrunde, dass ein Sollwert/Istwert-Vergleich nicht mit einem voreingestellten Sollwert durchgeführt wird, sondern dass der "Sollwert" aktuell in der Steuerungsvorrichtung erzeugt wird. Bei der vorliegenden erfindungsgemäßen Steuerungsvorrichtung wird dieser Sollwert/Istwert-Vergleich lediglich zum Öffnen des Ladeschalters, also zum Erzeugen eines hohen Widerstands im Ladeschalter verwendet, während das Schließen des Ladeschalters, also das Erzeugen eines niedrigen Widerstands im Ladeschalter taktgesteuert, also komplett ohne Sollwert/Istwert-Vergleich durchgeführt wird. Bei der vorliegenden erfindungsgemäßen Steuerungsvorrichtung wird somit keine Einschaltregelung sondern lediglich eine Abschaltregelung vorgenommen, wobei die Abschaltregelung dahingehend stattfindet, dass ein erstes Erfassungssignal, das für die Ausgangsspannung repräsentativ ist, mit einem zweiten Erfassungssignal, das für den Strom durch die Spule repräsentativ ist, verglichen werden. Haben die beiden Erfassungssignale eine vorbestimmte Beziehung zueinander, so wird der Ladeschalter geöffnet. In einem anschließenden Takt des Taktgebers wird der Ladeschalter dann wieder geschlossen, und der Kondensator des Schaltreglers wird wieder aufgeladen. Dann, wenn die beiden Erfassungssignale, die in der Tat beide Ist-Signale sind, wieder in der vorbestimmten Beziehung zueinander sind, die beispielsweise eine Gleichheitsbeziehung sein kann, wird der Ladeschalter wieder geöffnet, usw.

Bei der vorliegenden erfindungsgemäßen Steuerungsvorrichtung wird entweder das Stromerfassungssignal, das für den Verlauf des Stroms durch die Spule repräsentativ ist, oder das Spannungserfassungssignal, das für den zeitlichen Verlauf der Ausgangsspannung repräsentativ ist, invertiert, und zwar derart invertiert, dass eine Zunahme in dem zu erfassenden Signal sich in einer Abnahme des Erfassungssignals wiederspiegelt und umgekehrt. Ein Erfassungssignal, also entweder das Stromerfassungssignal oder das Spannungserfassungssignal wird daher derart verarbeitet, dass es zu dem zu erfassenden Signal negativ proportional ist, d. h. $f(x) = kx$, wobei $k$ kleiner als Null ist. Dies führt dazu, dass durch einen Vergleich der beiden Signale eine Stabilität erreichbar ist, da sich eine zunehmende Ausgangsspannung beispielsweise in einer Abnahme des Erfassungssignals wiederspiegelt, wenn das Spannungserfassungssignal das negativ proportionale Signal ist, so dass eine veränderte Steuerung des Ladeschalters dazu führt, dass die Ausgangsspannung beispielsweise in entgegengesetzter Richtung geändert wird. Ein Signal ist somit proportional zu der zu erfassenden Größe, während das andere Signal negativ proportional bezüglich der zu erfassenden Größe abgebildet wird.

An dieser Stelle sei darauf hingewiesen, dass es nicht eindeutig gesagt werden kann, ob das Spannungserfassungssignal oder das Stromerfassungssignal der Sollwert bzw. der Istwert ist. Eigentlich sind beide Signale Istwerte, die sich jedoch aufgrund der Tatsache, dass eines der beiden invertiert ist, dahingehend "einregeln", dass im Mittel ein konstanter Spulenstrom und eine konstante Ausgangsspannung erreichbar ist. Welchen Wert die konstante mittlere Ausgangsspannung haben wird, hängt davon ab, auf welche Spannungsniveaus bzw. Stromniveaus bzw. allgemein gesagt Signalniveaus die beiden Erfassungssignale gebracht werden oder wie die vorbestimmte Beziehung definiert ist. Mit anderen Worten ausgedrückt wird der Sollwert somit dadurch festgelegt, wie ein Niveau des durch die Spule fließenden Stroms beispielsweise auf ein Niveau des Stromerfassungssignals transformiert wird, und wie ein Niveau der Ausgangsspannung auf das Niveau des Spannungserfassungssignals transformiert wird, und wie insbesondere die Niveauumsetzung bei der Erfassung des Stroms und der Spannung, also des Stromerfassungssignals und des Spannungserfassungssignals zueinander, stattfindet.

Bei einem bevorzugten Ausführungsbeispiel der vorliegenden Erfindung, bei der die Strom- und die Spannungserfassung durch rückgekoppelte Operationsverstärker stattfinden, die mit einer Referenzspannung angesteuert werden, kann der Ausgangsspannungs-Sollwert bzw. der maximale Spulenstrom ohne weiteres durch Dimensionierung der Widerstände der rückgekoppelten Operationsverstärker sowie durch Dimensionierung der Referenzspannung, falls dieselbe nicht auf 0 eingestellt ist, erreicht werden. Alternativ oder zusätzlich kann das Niveau der mittleren Ausgangsspannung bzw. des mittleren Spulenstroms durch eine besondere Art des Komparators realisiert werden. Ist der Komparator so ausgestaltet, dass er nicht bei der Gleichheit der beiden Erfassungssignale ein Steuersignal liefert, sondern beispielsweise dann ein Steuersignal liefert, wenn die beiden Erfassungssignale um einen vorbestimmten Pegel voneinander entfernt sind, so kann damit ebenfalls eine Spannungs- bzw. Stromsteuerung durchgeführt werden.

Durch die vorliegende erfindungsgemäse Steuerungsvorrichtung werden daher aufgrund der beiden Erfassungseinrichtungen der Drosselstrom und die Ausgangsspannung (innerhalb eines Soll-Bereichs) in eine Spannung beispielsweise innerhalb eines definierten Bereichs abgebildet, so dass bei steigendem Drosselstrom die abgebildete Spannung beispielsweise steigt, jedoch die abgebildete Ausgangsspannung sinkt bzw. umgekehrt. Ein unabhängiger Takt schaltet dann den Transistor des Schaltreglers, woraufhin der Drosselstrom und damit auch das Stromerfassungssignal steigt. Sobald das Stromerfassungssignal das Spannungserfassungssignal überschneidet, wird der Schalter wieder ausgeschaltet. Dies kann regelungstechnisch ausgedrückt derart dargestellt werden, dass das aktuelle Spannungserfassungssignal ungefiltert den Sollwert für den maximalen Drosselstrom vorgibt oder umgekehrt. Es wird daher nicht, wie bei konventionellen Reglern, ein fest eingestellter Sollwert verwendet, weshalb auch keine Filterung eines Istwerts zu erfolgen hat. Durch Invertierung bei der Abbildung beispielsweise der Ausgangsspannung wird bewirkt, dass bei erhöhter Ausgangsspannung ein geringerer Maximalstrom zugelassen wird und umgekehrt.

Die vorliegende erfindungsgemäse Steuerungsvorrichtung ist dahingehend vorteilhaft, dass einerseits der Maximal-Strom der Drossel nicht überschritten wird, da beide Erfassungssignale, welche verglichen werden, eine durch den Schaltregler bestimmte Welligkeit besitzen. Dies ist ebenfalls im Vergleich zu konventionellen Reglern vorteilhaft, da bei diesen Reglern der mittlere Drosselstrom geregelt wird, so dass der Maximalstrom deutlich größer sein kann als der mittlere Strom, wie es beispielsweise beim sogenannten Lück-Betrieb der Fall ist. Dagegen wird bei der erfindungsgemäßen Schaltung aufgrund der Maximalregelung des Stroms unmittelbar auf den Strom "geschaut", der gerade vorliegt, so dass Teile des Schaltreglers nicht für einen kurzzeitig auftretenden erheblich höheren Maximalstrom gegenüber dem üblichen Betrieb, also dem mittleren Strom "überdimensioniert" werden müssen, was ebenfalls die Kosten des erfindungsgemäßen Schaltreglerkonzepts reduziert.

Die erfindungsgemäße Steuerungsvorrichtung benötigt weder ein Filter zum Filtern des Stromerfassungssignals noch ein Filter zum Filtern des Spannungserfassungssignals. Dies führt ebenfalls zu einer Schaltungsvereinfachung und damit zu einer Preisreduktion. Ferner sei darauf hingewiesen, dass das erfindungsgemäße Konzept gegenüber dem Stand der Technik, bei dem die Welligkeit der Ausgangsspannung durch ein Filter unterdrückt wird, diese Welligkeit positiv ausnützt, da sie dabei hilft ist, dass der Ladeschalter abgeschaltet wird.

Ein weiterer Vorteil der vorliegenden Erfindung besteht darin, dass es sich gezeigt hat, dass das erfindungsgemäße Steuerungsvorrichtungskonzept dazu führt, dass die Stromregelschleife in einem größeren Arbeitsbereich stabil ist. Während bei konventionellen Reglern der stabile Arbeitsbereich ohne weitere Maßnahmen bis zu einem Tastverhältnis bis 50% reicht, kann beim erfindungsgemäßen Konzept der Bereich einer stabilen Stromregelung immer größer als 50% und durch entsprechende Dimensionierung theoretisch bis zu 100% erweitert werden. Vernünftige Werte für die Praxis haben einen stabilen Betrieb bei einem Tastverhältnis bis etwa 80% bis 90% ergeben.

US-B1-6465993 offenbart eine Steuerungsvorrichtung zum Steuern eines Ladeschalters, von der sich der Gegenstand des Anspruchs 1 dadurch unterscheidet, daß der Knoten, an dem der Ladeschalter mit dem Netzwerk gekoppelt ist, ist mit dem Ausgangsknoten kurzgeschlossen. Statt dessen ist der Knoten in US-B1-6465993 über die Spule mit dem Ausgangsknoten an der Siebkapazität verbunden. Dies führt dazu, daß bei US-B1-6465993 das Spannungserfassungssignal oder das Fehlersignal gefilterte Gleichsignale sind, wahrend dies bei dem Gegenstand der vorliegenden Erfindung genau nicht der Fall ist.

Ferner wird bei US-B1-6465993 zwar die Ausgangsspannung erfaßt, und wird ferner der Strom durch die Spule erfaßt. Allerdings wird hier keine Inversion bei der Erfassung durchgeführt, wie es dagegen im Patentanspruch 1 ausgeführt ist.

US-B1-6465993 offenbart ferner keinen Komparator, wie er im Patentanspruch 1 definiert ist. Erfindungsgemäss wird dagegen durch einen Komparator, wie er im Patentanspruch 1 definiert ist, das Stromerfassungssignal mit dem Spannungserfassungssignal ohne weitere Umstände, Fehlerschwellen, Fehlerverstärker, Differenzverstärker oder irgend etwas ähnliches verglichen, wobei jedoch, eines des beiden Signale, also entweder das Stromerfassungssignal oder das Spannungserfassungssignal gegenüber der zu erfassenden Größe invertiert ist.

Die wesentlichen Unterschiede zu US-B1-6465993 D1 bestehen also darin, daß der Ladeschalter mit einem Ausgangsspannungsknoten kurzgeschlossen ist, daß ein an diesem "Kurzschlussknoten" abgenommenes Signal als Spannungserfassungssignal genommen wird, daß der Strom durch die Spule erfaßt wird, daß eines der beiden Signale invertiert wird, und daß dann genau diese beiden Signale miteinander verglichen werden, um dann den Ladeschalter ansprechend auf das Komparatorausgangssignal zu öffnen, während er durch einen Betriebstakt geschlossen wird.

Bevorzugte Ausführungsbeispiele der vorliegenden Erfindung werden nachfolgend Bezug nehmend auf die beiliegenden Zeichnungen detailliert erläutert. Es zeigen:

Fig. 1    ein Prinzipblockschaltbild des erfindungsgemäßen Schaltreglers;

Fig. 2    ein bevorzugtes Ausführungsbeispiel des erfindungsgemäßen Schaltreglers mit einem selbstsperrenden Transistor als Ladeschalter;

Fig. 3a    ein alternatives bevorzugtes Ausführungsbeispiel der vorliegenden Erfindung mit einem selbstleitenden Transistor als Ladeschalter;

Fig. 3b    ein alternatives Ausführungsbeispiel mit einem PMOS-Transistor als Schalter;

Fig. 4    einen Schaltregler gemäß Fig. 1 mit detaillierter Darstellung der erfindungsgemäßen Steuerung;

Fig. 5    ein Blockschaltbild eines bevorzugten Ausführungsbeispiels der erfindungsgemäßen Steuerung, bei dem lediglich neben Widerständen zwei Operationsverstärker, ein Komparator und ein Register eingesetzt werden;

Fig. 6    eine Gegenüberstellung eines Zeitverlaufs der aktuellen Ausgangsspannung $U_A$, des Zeitverlaufs des Spannungserfassungssignals, des Zeitverlaufs des Stromerfassungssignals, des Ausgangssignals der Schalteransteuerungseinrichtung, des Reset-Zustands des Registers und des Ausgangssignals des Komparators von Fig. 5;

Fig. 7    eine Betriebstabelle für das Register in Fig. 5; und

Fig. 8    einen bekannten Buck-Converter.

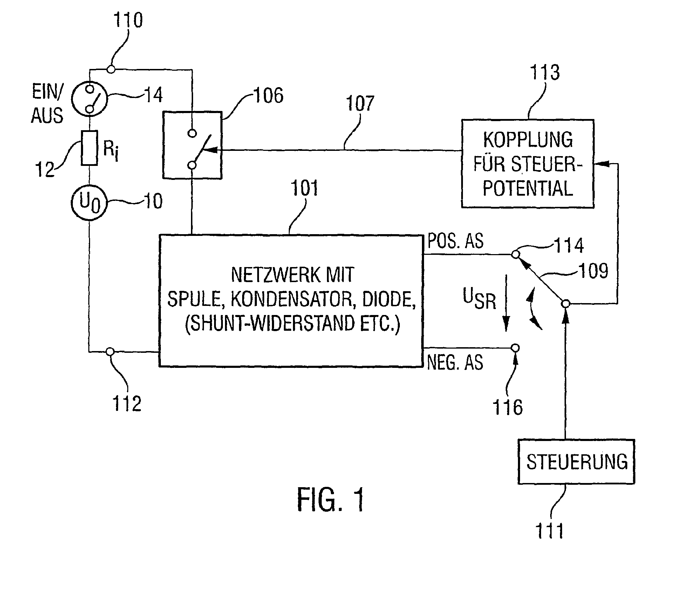

Bevor detailliert auf die Steuerung 111 des erfindungsgemäßen Schaltreglers in Fig. 1 eingegangen wird, sei zunächst das Funktionsprinzip eines alternativ zu dem in Fig. 8 gezeigten Schaltregler verwendbaren Schaltreglers mit mit der Anode der Diode gekoppelter Spule und/oder einem Wechselschalter mit Spannungskopplungseinrichtung zum Ansteuern des als Transistor ausgeführten Ladeschalters dargestellt.

Fig. 1 zeigt einen für die erfindungsgemäße Steuerung bevorzugten Schaltregler zum Erzeugen einer geregelten Ausgangsspannung $U_{SR}$ unter Verwendung einer Eingangsspannung $U_0$, die aus Übersichtlichkeitsgründen als Spannungsquelle $U_0$ 10, die in Serie zu einem Innenwiderstand $R_i$ 12 geschaltet ist, gezeigt ist. Wenn ein Ein/Aus-Schalter 14 betätigt wird, liegt zwischen einem ersten Eingangsknoten 110 und einem zweiten Eingangsknoten 112 eine Spannung an. Zwischen den ersten Eingangsknoten 110 und den zweiten Eingangsknoten 112 sind gewissermaßen seriell zueinander ein steuerbarer Schalter 106 und ein Netzwerk 101 geschaltet, das ein typisches Schaltregler-Netzwerk mit einer Spule, einem Kondensator und einer Diode ist. Typischerweise haben solche Schaltregler-Netzwerke 101 auch noch einen Shunt-Widerstand, um einen Strompfad mit einem definierten Ohmschen Widerstand zu schaffen.

Die Ausgangsspannung, die von dem in Fig. 1 gezeigten Schaltregler geregelt wird, liegt zwischen einer ersten Ausgangsschiene, die auch als positive Ausgangsschiene bezeichnet wird und mit dem ersten Ausgangsknoten 114 identisch ist, und einer zweiten Ausgangsschiene, die auch als negative Ausgangsschiene bezeichnet wird und mit dem zweiten Ausgangsknoten 116 identisch ist, an. Bei dem in Fig. 1 gezeigten Ausführungsbeispiel ist die positive Ausgangsschiene 114 auf ein erstes (positives) Potential bringbar, während die negative Ausgangsschiene 116 auf ein zweites Potential bringbar ist, das kleiner als das erste Potential ist.

Das Netzwerk 101, das eine Spule, einen Kondensator und eine Diode aufweist, hat die Diode insbesondere so geschaltet, dass sie mit der positiven Ausgangsschiene gekoppelt ist, wenn die Spule mit der negativen Ausgangsschiene gekoppelt ist, oder dass sie mit der negativen Ausgangsschiene gekoppelt ist, wenn die Spule mit der positiven Ausgangsschiene gekoppelt ist. Typischerweise wird die Diode also mit einer Ausgangsschiene, entweder der positiven Ausgangsschiene 114 oder der negativen Ausgangsschiene 116, gekoppelt sein.

Der Schalter 106, der in Fig. 1 gezeigt ist, wird auch als Ladeschalter bezeichnet, da er zum Laden des Kondensators in dem Netzwerk 101 vorgesehen ist. Insbesondere ist er in Serie zu der Diode geschaltet. Der Ladeschalter umfasst ferner einen Steuereingang 107, über den der Ladeschalter 106 geschlossen werden kann, was bedeutet, dass die Eingangsspannung nicht an dem Ladeschalter abfällt, sondern an dem Netzwerk 101. Ist der Schalter dagegen geöffnet, so fällt die Eingangsspannung über dem Schalter ab, das Netzwerk 101 ist somit (abgesehen von transienten Zuständen) nicht mit der Eingangsspannung beaufschlagt.

Über den Steuereingang 107 kann der Ladeschalter somit geöffnet oder geschlossen werden. Das Netzwerk 101 umfasst ferner einen Kondensator, der auch als Siebkondensator bezeichnet wird und derart geschaltet ist, dass an dem Kondensator die geregelte Ausgangsspannung abgreifbar ist. Ein wesentlicher Teil des Netzwerks 101 ist ferner die Induktivität, die nachfolgend auch als Spule bezeichnet wird, welche einerseits mit der Diode und andererseits mit dem Kondensator gekoppelt ist.

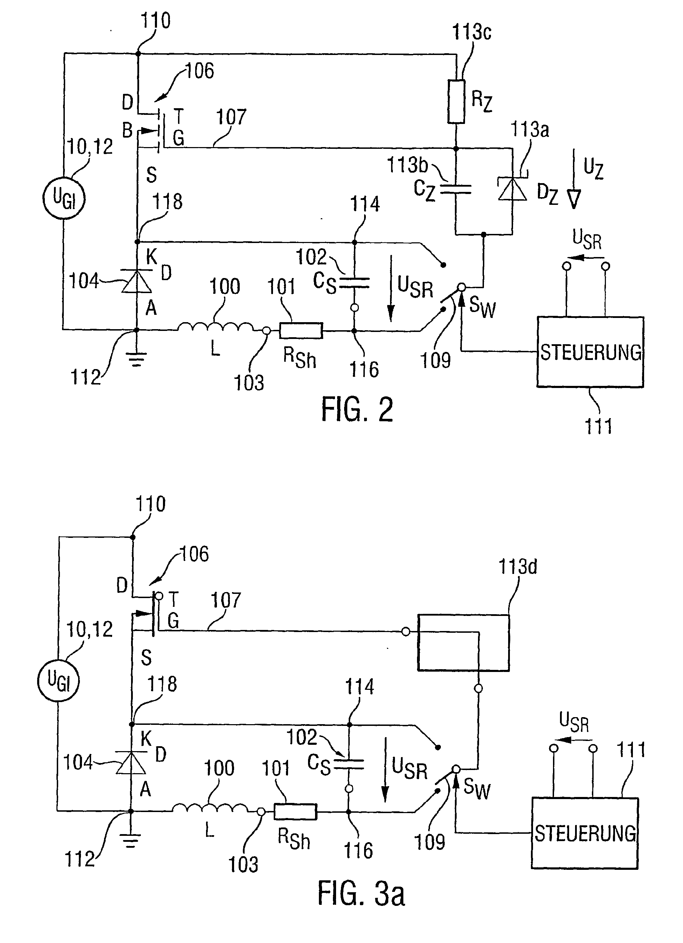

Der in Fig. 1 gezeigte Schaltregler hat ferner eine Umschalteinrichtung 109, die steuerbar ist, um abhängig von einem Umschaltsteuersignal, das von einer Steuerung 111 bereitgestellt wird, entweder die erste Ausgangsschiene 114 oder die zweite Ausgangsschiene 116 über eine Kopplungseinrichtung 113 mit dem Steuereingang 107 des Ladeschalters zu koppeln. Insbesondere ist der Ladeschalter 106 derart ausgebildet, dass er aufgrund eines Potentials an einer Ausgangsschiene geschlossen ist, und aufgrund eines Potentials an der anderen Ausgangsschiene geöffnet ist. Bei nachfolgend dargelegten Ausführungsbeispielen ist der Ladeschalter 106, wie später noch anhand der Fig. 2 und 3a dargestellt ist, als selbstleitender oder selbstsperrender NMOS-Transistor ausgeführt. In diesem Fall wird der Ladeschalter 106 durch das Potential an der positiven Ausgangsschiene geschlossen (leitend gemacht), während er durch das Potential an der negativen Ausgangsschiene geöffnet wird (in den Leerlauf gebracht wird).

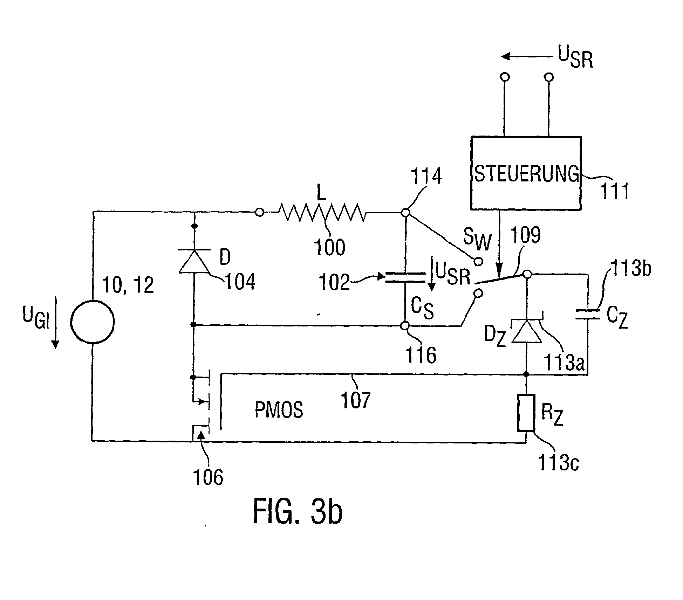

Wenn der Schalter 106 als PMOS-Transistor ausgeführt ist, werden die Spule 100 und gegebenenfalls der Shunt-Widerstand 101 zwischen die Knoten 118 und 114 geschaltet werden und die Knoten 112 und 116 kurzgeschlossen werden und dass das Potential an der negativen Ausgangsschiene dafür verwendet wird, um den Schalter zu öffnen, während das Potential an der positiven Ausgangsschiene 114 verwendet wird, um den Schalter 106 zu schließen, also in den Leerlaufbetrieb zu bringen, während das Potential an der positiven Ausgangsschiene verwendet wird, um den Schalter 106 zu schließen. Eine entsprechende Schaltung ist in Fig. 3b gezeigt.

Üblicherweise wird die Steuerung 111 einen Regler umfassen, der beliebig ausgestaltet sein kann, so lange er ein Signal ausgibt, das dazu führt, dass durch Öffnen und Schließen des Ladeschalters 106 die Ausgangsspannung $U_{SR}$ einen definierten erwünschten Zeitverlauf hat. Üblicherweise wird der Regler 111 derart arbeiten, dass er eine Ausgangsspannung mit einem Mittelwert am Ausgang 114, 116 des Netzwerks 101 sicherstellt, unabhängig davon, welche Last angeschaltet ist bzw. welchen Strom eine Last zieht. Der Zeitverlauf der Spannung $U_{SR}$ wird typischerweise ein Spannungsverlauf mit einer gewissen Welligkeit um einen Mittelwert herum sein. Die Welligkeit kann durch Dimensionierung von Spule und Kondensator in vorbestimmte Toleranzbereiche gebracht werden, wobei in vielen Fällen ein Signal mit einer Welligkeit um einen Mittelwert herum bereits ausreichend ist, und zwar insbesondere dann, wenn die Anforderungen an das Schaltregler-Ausgangssignal, also die Spannung $U_{SR}$, nicht sehr hoch sind, wie beispielsweise für eine Lampe oder etwas ähnliches. Andererseits wird in dem Fall, in dem der Schaltregler, wie er in Fig. 1 gezeigt ist, zusammen mit einer von ihm zu versorgenden integrierten Schaltung auf einem Substrat integriert ist, derselbe noch durch einen dem Ausgang 114, 116 des Schaltreglers nachgeschalteten Linearregler ergänzt sein, um Anforderungen an eine Spannung $U_{SR}$ zu erfüllen, die die Möglichkeiten des in Fig. 1 gezeigten Schaltreglers übersteigen, um mit vernünftigem Aufwand ein Ausgangssignal $U_{SR}$ mit entsprechender Spezifikation zu liefern.

Die Einschalt/Ausschalt-Steuerung wird derart vorgenommen, dass dann, wenn die Steuerung 111 bestimmt, dass der Ladeschalter geöffnet werden soll, der Umschalter 109 an die dem Öffnen des Ladeschalters 106 zugeordnete Ausgangsschiene, in Fig. 1 beispielsweise 116, verbunden wird, während dann, wenn der Ladeschalter 106 geschlossen werden soll, weil der Kondensator im Netzwerk 101 wieder nachgeladen werden soll, die Steuerung 111 den Umschalter 109 aktiviert, um nunmehr das Potential der oberen Ausgangsschiene 114 an den Steuereingang 107 des Ladeschalters 106 zu koppeln.

Fig. 2 zeigt ein Ausführungsbeispiel, bei dem die Spule 100 mit der Diode 104 und dem Siebkondensator 102 verschaltet ist. Beim Vergleich von Fig. 2 und Fig. 8 wird ersichtlich, dass die Spule 100 nicht mehr, wie in Fig. 8, mit der Kathode der Diode 104 verbunden ist, sondern mit der Anode der Diode 104 verbunden ist. Ferner wird aus dem Vergleich von Fig. 2 und Fig. 8 ersichtlich, dass nunmehr die positive Ausgangsschiene 114 mit einem Zwischenknoten 118, über den der Ladeschalter 106 mit der Diode 104 verbunden ist, mit dem Ausgangsknoten 114, also der ersten Ausgangsschiene, zusammenfällt. Ferner ist in Fig. 2 ein Shunt-Widerstand $R_{sh}$ 101 eingezeichnet, der zwischen die Spule 100 und die negative Ausgangsschiene 116 geschaltet ist. Ein Knoten 103 zwischen dem Shunt-Widerstand 101 und der Spule 100 wird auch als unterer Zwischenknoten bezeichnet.

Insbesondere ist der Ladeschalter 106 bei dem in Fig. 2 gezeigten Ausführungsbeispiel als selbstsperrender NMOS-Transistor ausgeführt, dessen Drain D mit dem ersten Eingangsknoten 110 verbunden ist, und dessen Source S zunächst mit einem Bulk-Anschluß B des Transistors kurzgeschlossen ist, und dessen Source S ferner direkt mit dem positiven Ausgangsknoten 114, also der positiven Ausgangsschiene gekoppelt ist. Die Kopplungseinrichtung 113 von Fig. 1 umfasst bei dem in Fig. 2 gezeigten Ausführungsbeispiel eine Zener-Diode $D_Z$ 113a, einen parallel geschalteten Kondensator $C_Z$ 113b sowie einen Vorschaltwiderstand $R_Z$ 113c. Der Vorschaltwiderstand dient dazu, um die eine Spannungsabfalleinrichtung bildende Parallelschaltung des Kondensators 113b und der Diode 113a über den ersten Eingangsknoten 110 mit Strom zu versorgen, wie es später noch dargelegt wird.

Für die Betriebsweise des in Fig. 2 gezeigten Schaltreglers bzw. überhaupt von Schaltreglern sind die transienten Charakteristika der Speicherelemente Spule L und Kondensator $C_S$ wichtig, da der Schaltregler, wie er in Fig. 2 gezeigt ist, eine Regelung der Ausgangsspannung durch ständiges Ein/Aus-Schalten des Ladeschalters 106 erreicht.

Eine Spule ist dadurch charakterisiert, dass die Spannung, die über der Spule abfällt, gleich der zeitlichen Ableitung des Stroms ist, der durch die Spule fließt. Entsprechend ist ein Kondensator dadurch gekennzeichnet, dass der Strom, der durch den Kondensator fließt, proportional zur zeitlichen Ableitung der an dem Kondensator liegenden Spannung ist.

Bezüglich der Spule ist ferner von großer Bedeutung, dass die an der Spule anliegende Spannung springen kann, dass jedoch der Strom durch die Spule nicht springen kann. Wird daher eine Spule eingeschaltet, also wird eine Gleichspannung (über einen Quelleninnenwiderstand) an die Spule angelegt, so steigt die Spannung an der Spule schlagartig auf den Wert der angelegten Gleichspannung an und fällt dann exponentiell ab. Gleichzeitig beginnt der Strom durch die Spule von seinem Ursprungswert 0 an langsam anzusteigen, bis er dann irgendwann einen Wert erreicht hat, der gleich dem Quotienten aus der angelegten Spannung und dem Innenwiderstand der Quelle ist. Wenn dieser stationäre Zeitpunkt erreicht ist, ist auch die über der Spule abfallende Spannung zu 0 geworden.

Entsprechend umgekehrt ist es beim Kondensator. Wird der Kondensator eingeschaltet, so steigt die Spannung an dem Kondensator langsam an, während der Strom durch den Kondensator springen kann.

Die Elemente Spule und Kondensator unterscheiden sich somit dadurch, dass der Strom durch den Kondensator springen kann, während die Spannung an der Spule springen kann. Die Spannung an dem Kondensator kann dagegen nicht springen. Dasselbe gilt auch für den Strom durch die Spule, er kann ebenfalls nicht springen. Dies führt dazu, dass zum Zeitpunkt des Einschaltens, also zum Zeitpunkt t = 0, wenn beim Zeitpunkt t = 0 das Einschalten stattfindet, die Spule als Leerlauf wirkt, während der Kondensator als Kurzschluß wirkt.

Nachfolgend wird auf das Ausschalten der Elemente Bezug genommen. Wird ein auf eine Gleichspannung aufgeladener Kondensator von der Gleichspannungsquelle abgetrennt, so passiert nichts. Er hält die Ladung, wenn er sich nicht über einen Widerstand entladen kann. Findet das Ausschalten des Kondensators jedoch über einen Kurzschluß statt, so führt dies dazu, dass ein sehr hoher Strom fließt, wobei zu diesem Zeitpunkt der Strom- und der Spannungs-Pfeil an dem Kondensator in entgegengesetzte Richtung zeigen. Der Kondensator arbeitet also, wenn er ausgeschaltet wird, als Generator.

Wird eine von einem Strom durchflossene Spule ausgeschaltet, so ist wieder von Bedeutung, wie die Spule ausgeschaltet wird. Wird eine Spule von einem Strom durchflossen, so existiert ein Magnetfeld, in dem Energie gespeichert wird. Wird eine Spule von der Quelle dadurch abgetrennt, dass zwischen Quelle und Spule ein Leerlauf ist, so würde der Strom durch die Spule eigentlich schlagartig auf 0 gebracht. Die in dem Magnetfeld der Spule gespeicherte Energie muss jedoch abfließen können. Daher führt ein Abschalten einer Spule durch Erzeugen eines Leerlaufs zwischen der Quelle und der Spule zu einer hohen Spannungsspitze, die dazu führt, dass sich an dem Schalter ein Lichtbogen bildet, über den die im Magnetfeld gespeicherte Energie zur Quelle abfließen kann. Aus diesem Grund wird eine Spule, um die theoretisch unendlich hohen Spannungsspitzen, die zerstörerisch wirken würden, zu vermeiden, über einen Widerstand, eine Diode oder einen Kondensator entladen. Dies führt zu einer Spannungsspitze mit reduzierter Höhe.

Wird eine Spule ausgeschaltet, so zeigen wieder der Spannungs-pfeil und der Strompfeil in unterschiedliche Richtungen. Die Spule arbeitet somit als Generator.

Ist, wie es in Fig. 2 (oder Fig. 3a) gezeigt ist, die Spule in Serie zu einem Kondensator geschaltet, so ist zum Einschaltzeitpunkt, also wenn eine Spannung von 0 in eine Spannung mit einem bestimmten Gleichspannungswert umgeändert wird, der Kondensator ein Kurzschluß und die Spule ein Leerlauf. Somit liegt die gesamte eingeschaltete Spannung zunächst an der Spule an und sinkt dann mit zunehmendem Strom durch den Serienschwingkreis aus Spule und Kondensator ab. Zum Zeitpunkt des Ausschaltens einer Spannung an der Spule erzeugt die Spule noch einen Strom, der noch eine gewisse Zeit lang fließt, bis die in der Spule gespeicherte Energie abgeflossen ist. Normalerweise (beim Abschalten der Spannung über einer Freilaufdiode) steckt die Energie aus der Spule dann im Kondensator, d. h. die Spannung $U_C$ ist gleich Null.

Die Funktionalität des Schaltreglers im stationären Zustand wird nachfolgend Bezug nehmend auf Fig. 2 beschrieben. Zum Zeitpunkt, zu dem der Schalter 106 geschlossen wird, liegt die volle Spannung $U_{G1}$ 10, 12 an der Diode 104 an. Über den Schalter 106 und die Spule 100 fließt ein Strom, der den Kondensator 102 lädt. Das Potential der positiven Ausgangsschiene 114 steigt somit relativ zur negativen Schiene an.

Im Mittel ist der Strom durch die Spule 100 gleich dem Strom, der an die Last, die zwischen die positive Ausgangsschiene 114 und die negative Ausgangsschiene 116 angeschaltet ist, abgegeben wird.

Solange der Schalter aus ist, speist die Drossel über die Freilaufdiode den Kondensator. Solange der Drosselstrom größer ist als der Laststrom steigt die Spannung am Kondensator. Je mehr Energie nun von der Drossel auf den Kondensator übergeht, desto kleiner wird der Drosselstrom. Irgendwann wird der Drosselstrom kleiner als der Laststrom und ab diesem Zeitpunkt sinkt die Spannung am Kondensator.

Um ein zu weites Absinken der Spannung zu vermeiden, muss der Schalter wieder eingeschaltet werden., so dass der Drosselstrom wieder ansteigt. Allerdings ist der Drosselstrom zum Zeitpunkt des Einschaltens immer noch geringer als der Laststrom, so dass die Spannung am Kondensator zunächst weiter abnimmt. Bei leitendem Schalter nimmt der Drosselstrom nun jedoch wieder zu und wird irgendwann wieder größer als der Laststrom. Ab diesem Zeitpunkt nimmt die Spannung am Kondensator wieder zu. Wird nun der Strom durch die Drossel zu groß, dann wird der Schalter wieder gesperrt, und der Strom durch die Drossel wird wieder geringer. Der Zyklus beginnt nun wieder von vorne.

Zum Einschaltzeitpunkt wird der Knoten 118 auf das Potential des Knotens 110 gezogen. An der Diode 104 liegt folglich die volle Eingangsspannung $U_{GL}$. Da die Spannung $U_{SR}$ über die Kapazität $C_S$ nicht springen kann, wohl aber die Spannung über der Spule L, wird der Knoten 116 ebenfalls mit hoch gezogen, so dass die Spannung $U_{SR}$ konstant bleibt. An der Drossel L liegt in der Folge die Spannung $U_{GL} - U_{SR}$ an, so dass der Strom durch die Drossel entsprechend der Gleichung $dI_L/dt = (U_{GL} - U_{SR})/L$ zunimmt. Hierbei wurde der Spannungsabfall an Rsh vernachlässigt. Da nach dem Abschalten des Schalters 106 der Strom der Drossel nicht mehr durch die Quelle $U_{GL}$ und den Schalter 106 fließen kann, und die Drossel einen Sprung ihres Stromes verhindert, muss dieser Strom über die Freilaufdiode 104 weiterfließen. Dies führt jedoch dazu, dass das Potential des Knotens 118 entsprechend der Kenlinie dieser Diode auf ein Potential springt, da etwa 0,7 V unter dem Potential des Knotens 112 liegt. Der Kondensator $C_S$ verhindert wiederum einen Sprung der Spannung $U_{SR}$. Somit springt das Potential des Knotens 116 zum Ausschaltzeitpunkt auf -(0,7 V + $U_{SR}$). Folglich liegt an der Drossel (Knoten 103 - Knoten 112) eine negative Spannung an, so dass der Strom durch die Drossel 100 entsprechend der Gleichung $dI_L/dt = -(U_{SR} + 0,7 V)/L$ abnimmt.

Nachdem - in anderen Worten ausgedrückt - zum Zeitpunkt des Einschaltens des Schalters 106 die volle Spannung an der Diode 104 liegt, und nachdem, wie es vorstehend ausgeführt worden ist, die Spannung an dem Kondensator nicht springen kann, jedoch an der Spule springen kann, wird gleichzeitig zum Einschaltzeitpunkt auch das Potential der negativen Ausgangsschiene 116 angehoben.

Irgendwann wird die Steuerung 111 den Umschalter 109 betätigen, derart, dass er nicht mehr mit der positiven Ausgangsschiene 114 sondern mit der negativen Ausgangsschiene 116 verbunden ist. Dies führt dazu, dass der Transistor 106 sperrt, und dass kein Strom mehr von der Quelle 10, 12 in das Netzwerk aus Spule, Diode und Kondensator fließt. Dies führt dazu, dass die Spule als Generator wirkt, dahingehend, dass das Potential am Knoten 103 abfällt und die Spule einen Strom abgibt, der über die Diode 104 den Kondensator 102 weiter lädt, so dass nach dem Ausschalten des Schalters die Spannung $U_{SR}$ noch etwas weiter ansteigt. Dieser Anstieg wird durch den Strom, der über die Last fließt, gebremst und wird dann, wenn der durch die Last gezogene Strom kleiner wird als der Strom, den die Spule 100 an den Knoten 114 liefert, zu einem Spannungsabfall. Dieser Spannungsabfall wird immer größer, da die Spule irgendwann nicht mehr genug Strom nachliefert. Bevor die Spannung zu klein wird, greift die Steuerung wieder ein und verbindet den Umschalter 109 wieder mit der positiven Ausgangsschiene, was dazu führt, dass der Schalter 106 wieder geschlossen wird und Strom liefert. Aufgrund der vorstehend ausgeführten Zusammenhänge nimmt die Ausgangsspannung $U_{SR}$ nach dem Einschalten noch etwas weiter ab, bis der positive Knoten 114 des Kondensators "nachgezogen" hat und die Spannung $U_{SR}$ wieder ansteigt. Irgendwann wird die Steuerung wieder den Umschalter 109 betätigen, dass er mit der negativen Ausgangsschiene 116 verbunden ist, so dass der Transistor 107 gesperrt wird, was wiederum dazu führt, dass die Spannung noch etwas weiter ansteigt, und zwar aufgrund der in der Spule (und dem Kondensator) gespeicherten Energie, die zu einem Strom über die Diode 104 und in den positiven Knoten 114 führt.

Der in Fig. 2a gezeigte Schalter 106 ist bei diesem Ausführungsbeispiel als selbstsperrender NMOS-Transistor ausgeführt. NMOS-Transistoren leiten dann, wenn die Spannung zwischen dem Gate, also dem Steueranschluß 107 und der Source größer als eine eventuell vorhandene Schwellenspannung ist. NMOS-Transistoren, die selbstleitend sind, leiten bereits bei einer Spannung $U_{GS} > 0$. Bei dem in Fig. 2a gezeigten selbstsperrenden NMOS-Transistor muss dagegen die Spannung zwischen dem Gate 107 und der Source (Knoten 118 in Fig. 2a) größer als das Negative des Betrags der Schwellenspannung $U_{th}$ des Transistors 106 sein. Aus diesem Grund umfasst die Kopplungseinrichtung 113 von Fig. 1 die in Fig. 2a gezeigten Elemente Vorschaltwiderstand 113c, Parallelkondensator 113b und Zener-Diode 113a.

Die Zener-Diode 113a ist derart konfiguriert, dass sie ab einer gewissen Durchbruchspannung, die fest konfiguriert ist, als Spannungsquelle wirkt, was anders ausgedrückt bedeutet, dass an der Parallelschaltung aus Kondensator 113b und Diode 113a immer die durch die Zener-Diode bestimmte Durchbruchspannung $U_Z$ abfällt. Ist der Umschalter 109 mit der positiven Schiene 114 verbunden, so liegt die an der Zener-Diode abfallende Spannung $U_Z$ direkt zwischen dem Gate und der Source des Transistors an. Der Steuereingang 107 des Transistors wird somit mit der positiven Ausgangsschiene über die Parallelschaltung aus Kondensator und Zener-Diode gekoppelt, dahingehend, dass der Transistor leitend wird.

Die einzige Randbedingung hierfür ist, dass die durch die Zener-Diode bestimmte Durchbruchspannung größer als die Schwellenspannung des Transistors ist. Diese Voraussetzung ist jedoch ohne weiteres zu erfüllen, da typischerweise Schwellenspannungen von Transistoren nicht besonders groß sind und Zener-Dioden mit verschiedenen definierten Durchbruchspannungen vorhanden sind. Ferner muss die Zener-Diode nur sehr lose auf den Transistor abgestimmt sein, da der Wert der Durchbruchspannung der Zener-Diode nur größer als die Schwellenspannung $U_{th}$ des Transistors sein muss. Damit sind die Anforderungen an die Schwellenspannung des Transistors 106 und an die Durchbruchspannung der Diode 113a hinsichtlich der benötigten Toleranz sehr niedrig.

Nachdem die Anforderungen an den Zusammenhang zwischen Schwellenspannung des Transistors und' Durchbruchspannung der Diode jedoch sehr lose sind, können die Abweichungen der verfügbaren Transistoren in Kauf genommen werden, ohne dass eine Schaltung zum Ausschuss wird. Das dargestellte Konzept ist somit dahingehend besonders vorteilhaft, dass die Ausschussrate und damit die Kosten des Endprodukts gering gehalten werden können.

Stellt die Steuerung fest, dass der Schalter 105 wieder ausgeschaltet werden soll, so steuert sie den Wechselschalter 109 derart an, dass er mit der negativen Ausgangsschiene verbunden wird. Dies führt dazu, dass das Potential am Gate 107 des Transistors um $U_{SR}$ kleiner wird als im eingeschalteten Zustand. Dadurch wird der Transistor gesperrt.

Ein besonderer Vorteil der in Fig. 2 gezeigten Schaltung besteht darin, dass ein definiertes Anlaufen der Schaltung sichergestellt wird. Für das definierte Anlaufen ist es insbesondere zunächst gleichgültig, ob der Wechselschalter 109 zum Zeitpunkt des Einschaltens mit der positiven Ausgangsschiene 114 oder der negativen Ausgangsschiene 116 verbunden ist. Wenn der Umschalter 109 insbesondere als Multiplexer aus Transistoren oder als Inverter realisiert wird, ist es undefiniert, ob der Umschalter 109 mit der oberen Schiene 114 oder der unteren Schiene 116 verbunden ist, wenn davon ausgegangen wird, dass vor dem Einschalten die gesamte in Fig. 2 gezeigte Schaltung in spannungslosem Zustand war, dass also alle Potentiale in der Schaltung auf dem Wert 0 sind.

Von diesem Ausgangs-Zustand, bei dem alle Potentiale gleich 0 sind, wird nachfolgend ausgegangen, um einen Anlaufvorgang der Schaltung in Fig. 2 darzustellen. Nachdem alle Potentiale gleich 0 sind, ist auch das Potential zwischen dem Gate 107 und der Source 118 des Schalters gleich 0. Da der Transistor ein selbstsperrender Transistor ist, ist der Schalter zunächst gesperrt. Wird eine positive Spannung 10, 12 zwischen den ersten Eingangsknoten 110 und den zweiten Eingangsknoten 112, der typischerweise der Masseknoten sein wird, angelegt, so wird zunächst der Kondensator $C_Z$ 113b über den Vorwiderstand $R_Z$ aufgeladen, bis die Spannung an dem Kondensator $C_Z$ 113b und der dazu parallelen Z-Diode $D_Z$ die Schwellenspannung $U_{th}$ des Transistorschalters 106 erreicht. Hierfür ist es, wie es ausgeführt worden ist, unerheblich, ob der Umschalter 109 mit dem Knoten 114 oder dem Knoten 116 verbunden ist.

Ist der Umschalter 109 mit dem Knoten 114 verbunden, so fällt die Spannung $U_Z$ an dem Kondensator 113b ohnehin direkt zwischen dem Gate 107 und der Source 118 des Transistors ab.

Ist dagegen der Umschalter 109 mit der negativen Schiene 116 verbunden, so lädt sich der Kondensator 113b ebenfalls über den Vorwiderstand $R_Z$ auf. Das Potential am Knoten 118, das das Source-Potential des Transistors bestimmt, wird jedoch zunächst nicht aus seinem 0-Wert gebracht, da noch keine Ladung des Kondensators 102, durch die das Potential 118 angehoben werden könnte, stattfindet, da der Umschalter 109 mit der negativen Schiene 116 verbunden ist.

In beiden Fällen des Schalters 109 steigt somit die Gate-Source-Spannung von einem Wert von 0 zum Zeitpunkt des Einschaltens der Quelle 10, 12 durch Betätigen des Schalters 14 in Fig. 1 auf einen Wert an, der gleich der Schwellenspannung des Transistors ist. Sobald dies der Fall ist, wird die Drain-Source-Strecke dieses Schalters 106 leitfähig, und der Kondensator $C_S$ wird (unabhängig von der Stellung des Schalters 109) aufgeladen. Der Ladestrom für den Kondensator 102 ($C_S$) fließt gleichzeitig über die Spule 100 zur Masse 112. Dies führt unmittelbar dazu, dass die Ausgangsspannung $U_{SR}$ aufgrund der Zunahme des Potentials an der positiven Ausgangsschiene 114 gegenüber dem Potential an der negativen Ausgangsschiene 116 zunimmt. Dieser Aufladevorgang setzt sich fort, bis die Spannung am

Kondensator $C_s$ die Spannung an der Z-Diode minus der Schwellenspannung des Schalters 106 erreicht.

Würde der Umschalter 109 mit der positiven Ausgangsschiene 114 verbunden sein, so würde der Ladevorgang immer weiter fortgesetzt, da der Transistor 106 geöffnet ist. Ist der Umschalter 109 dagegen mit der negativen Schiene 116 verbunden, so wird der Schalter dann wieder geschlossen, wenn das Potential zwischen Gate und Source gleich der Schwellenspannung ist. Wenn angenommen wird, dass das Potential an der Source gleich $U_{SR}$ ist, und wenn angenommen wird, dass das Potential am Gate des Transistors gleich dem Spannungsabfall an der Zener-Diode $U_Z$ ist, so ergibt sich ein Wert $U_{SR}$ am Ausgang des Schaltreglers, bei dem der Transistor wieder sperrt, als Differenz zwischen der Spannung an der Zener-Diode und der Schwellspannung. Würde nichts weiter unternommen, so würde der Transistor wieder schließen und die Ausgangsspannung würde auf $U_{SR} = U_Z - U_{th}$ verharren.

Durch Dimensionierung der Zener-Diode 113a ist dieser "Verharrungswert" der Ausgangsspannung $U_{SR}$ relativ frei wählbar. Bei einem Ausführungsbeispiel wird die Zener-Diode so dimensioniert, dass $U_{SR}$ so groß wird, (wenn im "ungünstigen Fall" der Wechselschalter 109 zum Hochfahren mit der negativen Schiene 116 verbunden ist), dass die Steuerung 111, die vorzugsweise von $U_{SR}$ versorgt wird, bereits arbeiten kann. Die Spannung $U_{SR}$ wird somit durch Dimensionierung der Zener-Diode (und der Schwellenspannung) so groß gemacht, dass bei Anliegen dieser Spannung an der Steuerung die Zustände an den Knoten in der Steuerung bereits definiert sind.

Die Steuerung wird daher einen Wert $U_{SR}$ erfassen und mit einem Grenzwert vergleichen. Sobald die Steuerung feststellt, dass $U_{SR}$ beim Hochfahren den vorbestimmten Zustand erreicht hat, ist die Steuerung 111 wirksam, um sicherzustellen, dass der Umschalter 109 mit der positiven Schiene 114 verbunden ist. War dies bereits beim Anlauf der Fall, so führt die Steuerung 111 hier keine Veränderung des Umschalters 109 durch. War dies jedoch nicht der Fall, also war zum Zeitpunkt des Hochfahrens der Umschalter 109, wie in Fig. 2 gezeigt, mit der negativen Schiene 116 verbunden, so wird die Steuerung den Umschalter 109 derart ansteuern, dass nunmehr nicht mehr die negative Schiene 116 an den Steueranschluß 107 gekoppelt ist, sondern dass die positive Schiene 114 an den Steuereingang 107 gekoppelt ist. Damit liegt an der Anode der Z-Diode das Potential der positiven Ausgangsschiene. Hierdurch steigt die Spannung an dem SiebKondensator $C_S$ 102 aufgrund des durch den Ladeschalter 106 fließenden Ladestroms weiter an, bis eine gewünschte Ausgangsspannung an $C_S$ anliegt. Nun folgt die eigentliche Spannungsregelung, indem der Wechselschalter 109 durch die Steuerung 111 hin- und hergeschaltet wird, um den Schalter T ein- bzw. auszuschalten, und um dadurch die Ausgangsspannung $U_{SR}$ nach Spannungs- und Strom-Bedarf einer Last (in Fig. 2 nicht gezeigt) zu regeln.

Die in Fig. 2 gezeigte Schaltung ist somit insbesondere dahingehend vorteilhaft, dass sie definiert hochfährt, wobei es zum Zeitpunkt des Hochfahrens unerheblich ist, in welcher Stellung der Schalter 109 steht. Ferner wird es bevorzugt, die Steuerung 111 derart zu dimensionieren, dass sie bereits dann definiert arbeitet, wenn die Ausgangsspannung gleich der Zener-Dioden-Spannung $U_Z$ minus der Schwellenspannung des Transistors 107 ist. Damit kann ohne eigene Versorgung für die Steuerung 111 der Hochfahrvorgang definiert fortgesetzt werden. Dies führt insbesondere zu einer preisgünstigen Schaltung, da keine speziellen Hochfahr-Maßnahmen getroffen werden müssen, außer der Sicherstellung, dass der Wechselschalter 109 mit der positiven Schiene 114 verbunden ist. Nachdem keine speziellen Maßnahmen erforderlich sind und insbesondere Spannungsüberprüfungen im Hinblick auf die Steuerung 111 etc. durchgeführt werden müssen, findet der Hochfahrvorgang sehr schnell statt.

Des weiteren sei darauf hingewiesen, dass der Spannungsanstieg durch entsprechende Dimensionierung des Widerstands 113c und des Kondensators 113b sehr schnell dimensioniert werden kann. So wird es ohnehin bevorzugt, den Widerstand 113c relativ groß zu dimensionieren, damit die durch ihn erzeugte Verlustleistung nicht in erhebliche Größenordnungen kommt. Ferner wird es bevorzugt, den Kondensator $C_Z$, der ohnehin nur zur Stabilisierung der Zener-Diode 113a bzw. zu deren (kleiner) Sperrschichtkapazität dient, ebenfalls klein zu dimensionieren, damit er schnell auf die Spannung $U_Z$ aufgeladen wird. Das Hochfahren findet somit derart statt, dass keine Zeitkonstanten berücksichtigt werden müssten, die das Hochfahren des Schaltreglers deutlich abbremsen würden.

Fig. 3a zeigt ein alternatives Ausführungsbeispiel, das sich von Fig. 2 dahingehend unterscheidet, dass der Transistor T 106 nunmehr ein selbstleitender NMOS-Transistor ist, und dass die Kopplungseinrichtung 113 von Fig. 1, die in Fig. 2 durch die Elemente 113a, 113b, 113c realisiert war, in Fig. 3a durch eine einfache Kopplung 113d realisiert ist. Während in Fig. 2 das Potential an der ersten Ausgangsschiene oder der zweiten Ausgangsschiene über die Kopplungseinrichtung 113 mit einem Spannungsabfall beaufschlagt worden ist, wird in Fig. 3a das Potential an der ersten Ausgangsschiene 114 oder der zweiten Ausgangsschiene 116 durch eine einfache Verbindung unmittelbar mit dem Steueranschluß 107 des Schalters 106 gekoppelt. Der Transistor 106 ist als selbstleitender n-Kanal-MOS-FET oder n-Kanal-JFET ausgeführt. Die Beschaltung des Transistors, der den Ladeschalter 106 bildet, bezüglich Drain und Source ist identisch zu dem Fall von Fig. 2.

Die Spannungsquelle bzw. Spannungsabfalleinrichtung aus der Z-Diode mit dem Vorwiderstand und dem parallelen Kondensator von Fig. 2 entfällt dagegen bei Fig. 3a, um eine unmittelbare Potentialkopplung von einer Ausgangsschiene an den Steueranschluß 107 und des Schalters zu erreichen. Vorzugsweise wird die Schwellen-Spannung des Transistors $U_{Th}$ so dimensioniert, dass sie gleich der Z-Spannung der Z-Diode minus der Schwellen-Spannung des selbstsperrenden MOS-FETs im ersten Fall ist, damit die Ausgangsspannung $U_{SR}$ im Hochfahrvorgang einen solchen Wert erreicht, durch den die Steuerung 111 bereits betreibbar ist, um zu einem bestimmten Zeitpunkt des Hochfahrvorgangs den Umschalter 109 derart ansteuern zu können, dass er definiert mit der positiven Schiene 114 verbunden ist.

Schwellenspannungen bei selbstleitenden NMOS-Transistoren oder N-JFET-Transistoren sind dahingehend definiert, dass sie eine negative Spannung zwischen Gate und Source des Transistors definieren, bei der der Transistor 106 gerade sperrt. Spannungen, die höher als die negative Schwellenspannung sind, führen dann dazu, dass der Transistor leitet, während Spannungen, die noch negativer als die Schwellenspannung sind, dazu führen, dass der Transistor sperrt.

Im nachfolgenden wird der Hochfahrvorgang der in Fig. 3a gezeigten Schaltung erläutert. Wieder wird davon ausgegangen, dass im Ausgangszustand alle Potentiale gleich 0 sind. Damit leitet der Schalter (er ist selbstleitend ausgeführt), was dazu führt, dass das Potential an der Ausgangsschiene 114 angehoben wird. Es sei darauf hingewiesen, dass zum Zeitpunkt des Einschaltens zunächst sowohl der Knoten 114 als auch der Knoten 116 auf das Gleichspannungspotential angehoben werden, dass jedoch die Potentialdifferenz zwischen den Knoten gleich 0 ist. Die beiden Knoten 114 und 116 werden schlagartig angehoben, da der Kondensator, wie es ausgeführt worden ist, zum Zeitpunkt des Einschaltens einer Gleichspannung als Kurzschluß wirkt. Erst dann, wenn Ladung auf den Knoten 114 über den Ladeschalter 106 geliefert wird, entsteht eine Potentialdifferenz zwischen dem Knoten 114 und dem Knoten 116, die dazu führt, dass die Ausgangsspannung $U_{SR}$ von 0 V auf Werte größer als 0 V ansteigt. Nach dem Einschalten der Spannung wird somit der Kondensator 102 über den Transistor, der selbstleitend ist, aufgeladen.

Würde der Wechselschalter 109, der wieder derart ausgeführt sein kann, dass sein Anfangszustand undefiniert ist, mit der positiven Schiene 114 verbunden sein, so würde der Ladevorgang immer weiter fortgesetzt werden, da Gate und Source des Transistors kurzgeschlossen sind, derart, dass $U_{GS}$ gleich 0 V ist, was beim selbstleitenden Transistor immer einen leitfähigen Zustand zwischen Drain und Source bedeutet. Würde dagegen der Umschalter 109 mit der negativen Schiene verbunden sein, so würde der Ladezustand irgendwann aufhören, da das Source-Potential, also das Potential der positiven Schiene 114 immer weiter zunimmt. Wenn das Source-Potential größer als die Schwellenspannung ist, wird der Transistor geschlossen und die Ausgangsspannung $U_{SR}$ steigt nicht mehr weiter an. Daher wird, wie es ausgeführt worden ist, die Schwellenspannung des Transistors 106 derart gewählt, dass eine dann am Ausgang anliegende Ausgangsspannung $U_{SR}$ bereits ausreichend hoch ist, um die Steuerung 111, die mit der Spannung $U_{SR}$ versorgt wird, definiert arbeiten zu lassen, damit dieselbe dann den Umschalter 109 von der negativen Schiene 116 trennt und mit der positiven Schiene 114 verbindet, damit der Transistor wieder geöffnet ist, so dass der Ladevorgang des Kondensators 102 weiter fortgesetzt werden kann, bis die Steuerung 111 in den normalen Betrieb übergeht und eine Schaltersteuerung aufgrund einer tatsächlichen gewünschten Ausgangsspannung $U_{SR}$ vornimmt.

Zusammenfassend ist der Hochfahrvorgang in Fig. 3a somit derart, dass zunächst der Schalter T leitet. Nach Anlegen einer positiven Eingangsspannung $U_{GI}$ an den Eingang der Schaltung wird der Kondensator 102 über den Schalter T und die Drossel L aufgeladen, bis die Spannung am Kondensator $C_S$ die Schwellenspannung des Schalters T erreicht (wenn der Umschalter 109 mit der negativen Schiene 116 verbunden war). Dann ist die Spannung am Ausgang der Schaltung $U_{SR}$ bereits so groß, dass ein kontrolliertes Arbeiten des Reglers gewährleistet ist. Dieser schaltet nun den Wechselschalter $s_W$ so, dass am Gateanschluß des Schalters die positive Schiene der Ausgangsspannung $U_{SR}$ anliegt. Dadurch steigt die Spannung an $C_S$ weiter an, bis die gewünschte Ausgangsspannung an $C_S$ anliegt. Nun folgt die eigentliche Spannungsregelung. Durch Umschalten des Wechselschalters $s_W$ durch die Regelschaltung 111 wird der Schalter T ein- und ausgeschaltet, wodurch die Ausgangsspannung $U_{SR}$ geregelt wird.

Bezüglich der Dimensionierung der Schwellenspannung des Transistors 106 im Fall von Fig. 3a bzw. der Schwellenspannung des Transistors 106 und der Zener-Diodenspannung $U_Z$ von Fig. 2 sei darauf hingewiesen, dass diese Wert so dimensioniert werden, dass die Steuerung 111 bei der automatisch ohne Eingriff in die Schaltung und bei vorausgesetzter Stellung des Wechselschalters 109 auf der negativen Schiene 116 erreichte maximale Ausgangsspannungswert $U_{SR}$, der sich ohne irgendeine Intervention von selbst ergibt, bereits so groß ist, dass die Steuerung mit $U_{SR}$ versorgt werden kann.

Wird die Steuerung 111 bzw. werden die Schwellenspannung bzw. die Schwellenspannung und die Zener-Diodenspannung derart dimensioniert, dass die Ausgangsspannung $U_{SR}$, die „automatisch" erreicht wird, bereits etwas höher ist als die Spannung, bei der die Steuerung 111 definiert arbeitet, so kann die Steuerung 111 auch derart ausgestaltet sein, um sofort, wenn sie definiert arbeiten kann, also wenn die Eingangsspannung ausreichend groß ist, den Umschalter 109 nach oben, also auf die positive Ausgangsschiene zu legen. So ist der Umschaltzeitpunkt nicht darauf begrenzt, dass immer die maximale automatisch erreichbare Ausgangsspannung vorliegen muss, um den Schalter umzuschalten. Statt dessen ist es erforderlich, dass irgendwann im Hochfahrvorgang sichergestellt wird, dass der Umschalter mit der positiven Ausgangsschiene 114 verbunden ist.

Würde dagegen eine Steuerung verwendet werden, die unabhängig von $U_{SR}$ arbeitet, so könnte von vornherein, also bereits z. B. zum Zeitpunkt des Einschaltens der Gleichspannung $U_{GI}$ sichergestellt werden, dass der Schalter 109 mit der positiven Schiene 114 verbunden ist. Aufgrund der Einfachheit der Schaltung wird es jedoch bevorzugt, dass die Steuerung 111 von der Ausgangsspannung $U_{SR}$ versorgt wird, wobei in diesem Fall bei der Dimensionierung des Transistors und gegebenenfalls der Diode eher an die Grenze gegangen wird, dahingehend, dass z. B. 90% der sich maximal einstellenden Ausgangsspannung $U_{SR}$ bis zum Umlegen des Wechselschalters 109 verwendet werden, damit auch die Anforderungen an die Steuerung möglichst gering werden, da typischerweise Schaltungen, die mit geringeren Spannungen bereits einsatzfähig sind, mit den sonstigen Spannungsniveaus der in Fig. 2 und 3a gezeigten Schaltungen eher nicht kompatibel sind, so dass eine möglichst hohe automatisch sich einstellende Ausgangsspannung $U_{SR}$ bevorzugt wird.

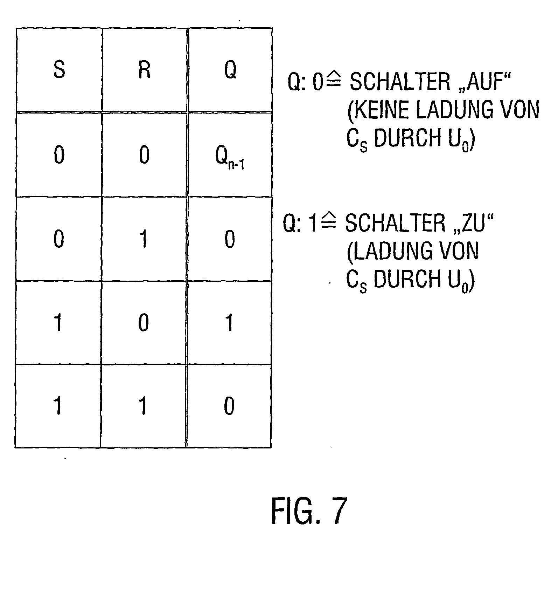

Bei den in den Fig. 2 und 3a gezeigten Ausführungsbeispielen wird die Spule nicht, wie in Fig. 7, mit der Kathode der Diode gekoppelt, sondern mit der Anode. Dies hat den Vorteil, dass dann, wenn der Umschalter 109 mit der positiven Schiene 114 verbunden ist, das Potential, das zwischen Gate und Source des Transistors erzeugt wird, nicht durch die transienten Charakteristika der Spule beeinträchtigt wird. Die Spule kann bei einem anderen Ausführungsbeispiel auch mit der Diode kathodenseitig gekoppelt sein, derart, dass dann die Umschalteinrichtung 109, wenn sie die positive Schiene mit dem Transistorgate 107 verbindet, gewissermaßen die Spule mit dem Gate des Transistors entweder direkt koppelt oder kurzschließt oder über eine Spannungsabfalleinrichtung indirekt koppelt.

Ein Anordnen der Spule anodenseitig zur Diode hat ferner den Vorteil, dass dann die Eingangsspannung der Schaltung nur durch die Spannungsfestigkeit der drei Elemente Schalter, Diode und Drossel begrenzt. Ferner versorgt sich der Schaltregler selbst und läuft definiert hoch. Das Springen des Gleichtaktpotentials der Ausgangsspannung zwischen der positiven und der negativen Schiene der Eingangsspannung je nach Zustand des Schalters T ist für die Last nicht von primärer Bedeutung, da sie von diesem Springen nichts merkt, da die Last lediglich die Potentialdifferenz zwischen der oberen Ausgangsschiene und der unteren Ausgangsschiene erfährt, jedoch nicht das "absolute" Potential der positiven Ausgangsschiene bzw. der negativen Ausgangsschiene für sich.

Wie es bereits ausgeführt worden ist, ist die Anlaufzeit selbst durch die Dimensionierung von $R_Z$ und $C_Z$, die Induktivität der Drossel L und die Kapazität des Sieb-Kondensators $C_S$ definiert. Eine zusätzliche Anlauf-Verzögerung zur Sicherstellung der Spannungs-Versorgung des Reglers wird nicht benötigt.

Ferner sei darauf hingewiesen, dass durch das dargestellte Konzept der Eingangsspannungs-Bereich, der üblicherweise auf ein Eingangsspannungs-Verhältnis von $U_{E,max}/U_{E,min} \leq 5:1$ beschränkt ist, auf mindestens 50:1 erhöhbar ist, so lange die Spannungsfestigkeit der Diode, der Spule und des Schalters entsprechend mitgeführt wird, da diese Elemente durch die Eingangsspannung beaufschlagt werden. Dagegen werden weder der Kondensator noch der Umschalter noch die Steuerung mit derart hohen Spannungen beaufschlagt, so dass für diese Elemente die maximale Eingangsspannung nicht berücksichtigt werden muss, was wiederum zu einem preisgünstigeren und gleichzeitig flexibleren Schaltreglerkonzept führt.

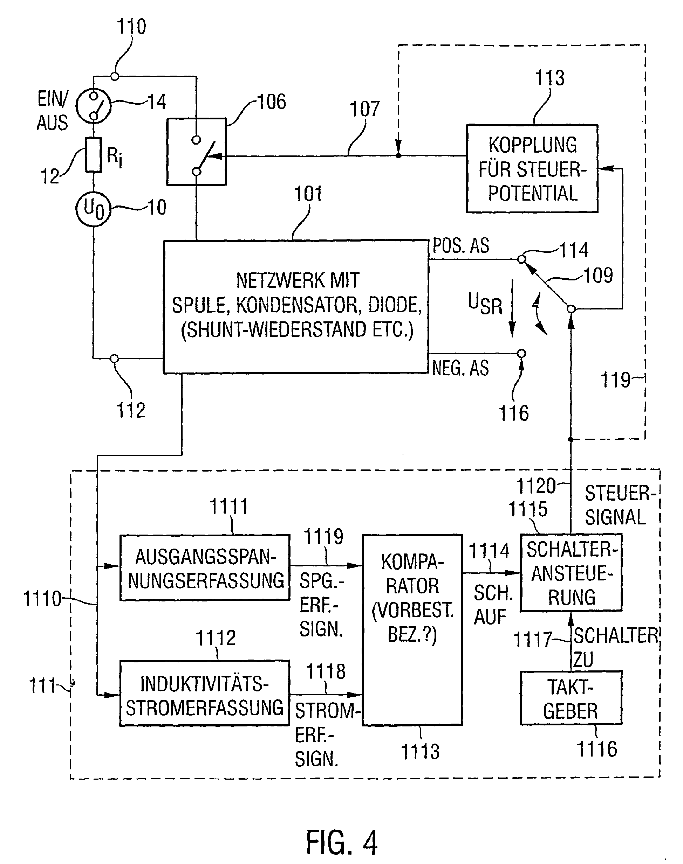

Fig. 4 zeigt eine detaillierte Darstellung der Steuerung 111 gemäß einem Ausführungsbeispiel der vorliegenden Erfindung, die entweder verwendet werden kann, um den Umschalter 109 anzusteuern, wenn der Ladeschalter 106 ein Transistor ist, oder die verwendet werden kann, um den Schalter 106 direkt anzusteuern, wenn der Schalter 106 irgend ein Schalter ist, der durch unterschiedliche Steuersignale geöffnet bzw. geschlossen werden kann. Diese Alternative zur Steuerung eines Ladeschalters ist in Fig. 4 mit einer gestrichelten Linie 119 dargestellt. Daraus ist ersichtlich, dass die in Fig. 4 gezeigte erfindungsgemäße Steuerung 111 auch zum Steuern des allgemeinen Ladeschalters 406 in Fig. 8 für den bekannten Buck-Regler einsetzbar ist.

Die Steuerungseinrichtung 111 ist mit dem Netzwerk 101, das die Spule, die Kapazität und die Induktivität aufweist, gekoppelt, wie es durch eine Kopplungseinrichtung 1110 schematisch dargestellt ist. Die erfindungsgemäße Steuerung umfasst eine Ausgangsspannungserfassungseinrichtung 1111 zum Erzeugen der Ausgangsspannung $U_{SR}$ zwischen der positiven Ausgangsschiene 114 und der negativen Ausgangsschiene 116 bzw. zwischen dem positiven Ausgangsknoten 414 und dem negativen Ausgangsknoten 416 von Fig. 8. Ferner ist eine Induktivitätsstromerfassungseinrichtung 1112 vorgesehen, die ausgebildet ist, um den Strom durch die Spule bzw. Induktivität in dem Netzwerk 101 zu erfassen. Es kann gezeigt werden, dass der Strom durch die Spule in dem Netzwerk 101 im Mittel gleich dem Strom durch eine an die positive Ausgangsschiene 114 und negative Ausgangsschiene 116 gekoppelte Last ist, die, wie es in Fig. 8 anhand der Last 408 gezeigt ist, durch die geregelte Spannung $U_{SR}$ versorgt wird.

Die Ausgangsspannungserfassungseinrichtung 1111 ist ausgebildet, um ausgangsseitig ein Spannungserfassungssignal zu liefern. Entsprechend ist die Induktivitätsstromerfassungseinrichtung 1112 ausgebildet, um ausgangsseitig ein Stromerfassungssignal zu liefern. Das Spannungserfassungssignal und das Stromerfassungssignal werden in einen Komparator 1113 eingespeist, der wirksam ist, um festzustellen, ob zwischen dem Spannungserfassungssignal und dem Stromerfassungssignal eine vorbestimmte Beziehung vorherrscht oder nicht. Bei dem in Fig. 4 gezeigten Ausführungsbeispiel ist der Komparator 1113 ausgebildet, um dann, wenn eine vorbestimmte Beziehung zwischen den beiden Signalen besteht, ein Schalter-auf-Signal 1114 an eine Schalterbetätigungseinrichtung 1115 zu liefern. Die Schalterbetätigungseinrichtung 1115, die vorgesehen ist, um den Ladeschalter entweder direkt über den gestrichelten Weg 1119 oder indirekt über den Umschalter 109 anzusteuern, ist ferner mit einem Taktgeber 1116 gekoppelt, der ausgangsseitig ein Taktsignal liefert, das als Schalter-zu-Signal 1117 wirksam ist. Entweder die Ausgangsspannungserfassungseinrichtung 1111 oder die Induktivitätsstromerfassungseinrichtung 1112 sind ausgebildet, um ihr jeweiliges Erfassungssignal, also das Spannungserfassungssignal oder das Stromerfassungssignal so zu erzeugen, dass ein Zeitverlauf des jeweiligen Erfassungssignals negativ proportional ($f(x) = kx$, wobei k kleiner als Null ist) zu einem Zeitverlauf des erfassten Signals ist. In anderen Worten ausgedrückt ist beispielsweise die Ausgangsspannungserfassungseinrichtung 1111 derart aufgebaut, dass sie ein Spannungserfassungssignal liefert, das dann in seinem Pegel ansteigt, wenn der Pegel der Ausgangsspannung abfällt, und das umgekehrt dann in seinem Pegel abfällt, wenn die Ausgangsspannung zunimmt. Damit hat das Spannungserfassungssignal einen gegenüber der zu erfassenden Ausgangsspannung invertierten Zeitverlauf, so dass bei steigender Ausgangsspannung das Spannungserfassungssignal fällt und umgekehrt.

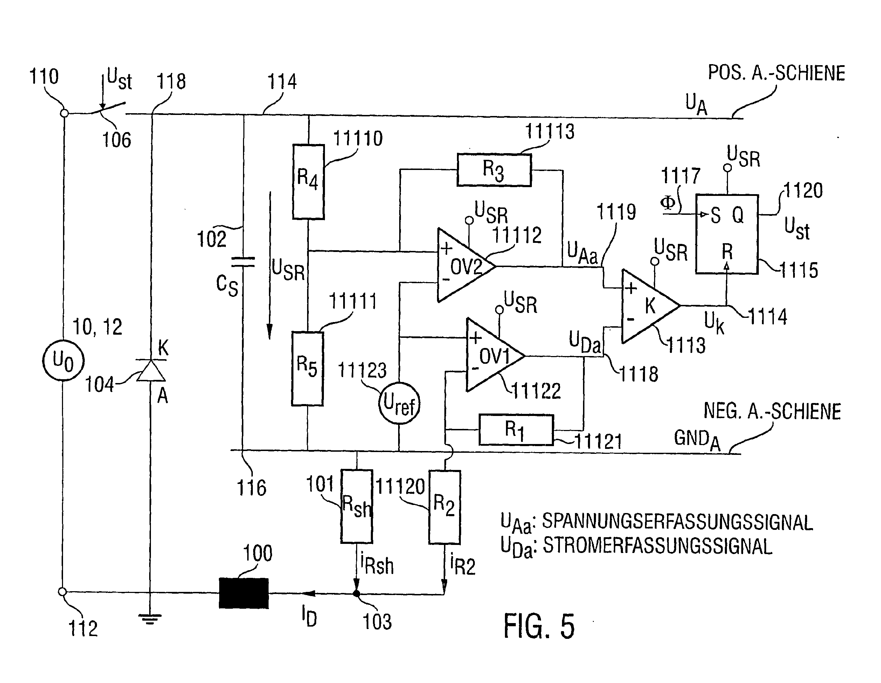

Es sei darauf hingewiesen, dass nicht unbedingt die Ausgangsspannungserfassungseinrichtung 1111 das in seinem Zeitverlauf invertierte Erfassungssignal liefern muss, sondern dass dies genauso durch die Induktivitätsstromerfassungseinrichtung 1112 bewerkstelligt werden kann. Aufgrund der in Fig. 5 dargestellten speziellen Schaltungskonfiguration wird es jedoch bevorzugt, dass die Ausgangsspannungserfassungseinrichtung 1111 ein Erfassungssignal mit invertiertem Zeitverlauf liefert, um die Anzahl der verwendeten Elemente zu minimieren.

Der Komparator 1113 ist bei einem bevorzugten Ausführungsbeispiel der vorliegenden Erfindung ausgebildet, um festzustellen, ob das Spannungserfassungssignal und das Stromerfassungssignal den gleichen Pegel haben. Ferner ist der Komparator beispielsweise so ausgebildet, dass er dann, wenn die beiden zu vergleichenden Eingangssignale gleich sind, einen Spannungsimpuls ausgibt, während der Komparator dann, wenn die beiden zu vergleichenden Signale nicht gleich sind, nichts ausgibt. Alternativ könnte der Komparator jedoch auch ausgebildet sein, um im Fall der Gleichheit einen ersten Spannungspegel und im Fall der Gleichheit einen zweiten größeren oder kleineren Spannungspegel auszugeben. Wieder alternativ könnte der Komparator auch ausgebildet sein, um im Fall der Gleichheit eine ansteigende Signalflanke in seinem Ausgangsspannung zu erzeugen, während im Fall der Ungleichheit eine fallende Signalflanke erzeugt wird und umgekehrt.

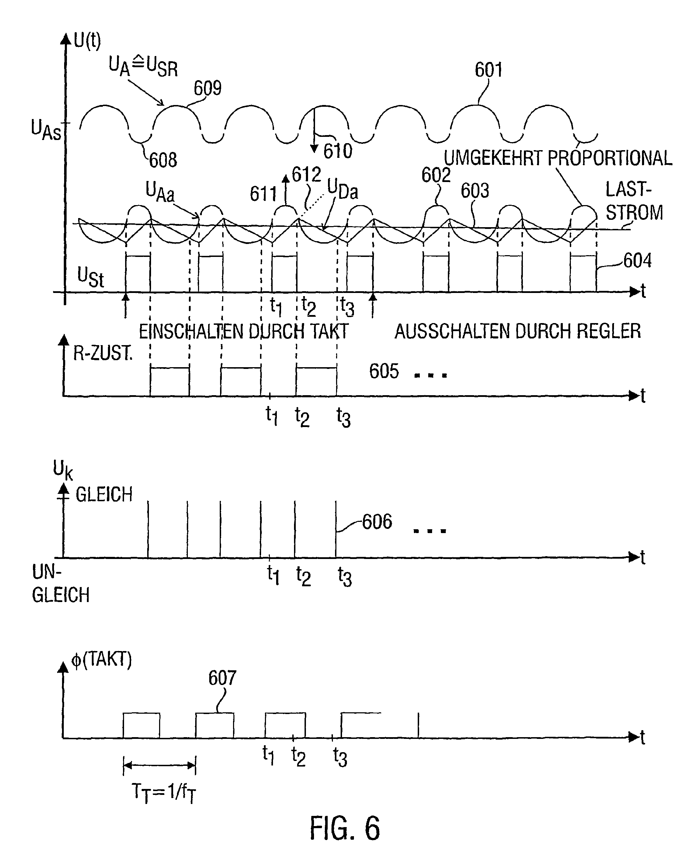

Alternativ könnte der Komparator auch ausgebildet sein, um nicht nur ein Signal auszugeben, das die Gleichheit der zu vergleichenden Eingangssignale anzeigt, sondern das zusätzlich noch anzeigt, welches der beiden Signale größer ist bzw. welches der Signale kleiner ist. Wie es jedoch nachfolgend anhand von Fig. 6 dargestellt wird, ist aufgrund des typischen Verlaufs des Spannungserfassungssignals und des Stromerfassungssignals zueinander von vorneherein bekannt, welches Signal größer ist, und welches Signal kleiner ist. Dies ist allerdings nicht der Fall, wenn unvorhergesehene Lastsprünge das Ausgangsspannungserfassungssignal beeinflussen.

Die Schalterbetätigungseinrichtung bzw. die Schalteransteuerungseinrichtung 1115 ist wirksam, um ausgangsseitig ein Steuersignal zu erzeugen, um den Schalter zu schließen, also niederohmig zu machen, und um den Schalter 106 zu öffnen, also hochohmig zu machen. Das Schalter-Schließen wird durch den Taktgeber 1116 besorgt, derart, dass die Schalterbetätigungseinrichtung 1115 wirksam ist, um zu einem bestimmten Ereignis in einer Taktperiode des vom Taktgeber 1117 erzeugten Signals den Schalter 106 so anzusteuern, dass er geschlossen wird, während dann, wenn der Schalter geschlossen war, derselbe wieder geöffnet wird, wenn von dem Komparator ein Schalter-auf-Signal 1114 von der Schalteransteuerungseinrichtung 1115 erhalten worden ist.

Abhängig von der speziellen Konfiguration des Taktgebers 1116 oder der Schalteransteuerungseinrichtung 1115 kann die Schalteransteuerungseinrichtung 1115 z. B. eine positive Taktflanke als Schalter-zu-Signal interpretieren. Alternativ kann auch eine negative Taktflanke als Schalter-zu-Signal interpretiert werden. Je nach Implementierung der Schalteransteuerungseinrichtung 1115 könnte auch z. B. die zweite, dritte, etc. ansteigende oder fallende Flanke als Schalter-zu-Signal interpretiert werden. Allgemein ist die Schalteransteuerungseinrichtung 1115 somit ausgebildet, um ein Ereignis in dem Takt, der von dem Taktgeber 1116 bereitgestellt wird, als Schalter-zu-Signal 1117 zu interpretieren, so dass bei Erfassen dieses Signals ein entsprechender Puls von der Schalteransteuerungseinrichtung 1115 an den Wechselschalter 109 oder direkt an den Ladeschalter 106 abgegeben wird. Erzeugt der Taktgeber bereits ein Taktsignal mit korrekten Spannungsverhältnissen, so kann die Schalteransteuerungseinrichtung 1115 wirksam sein, um dieses Signal einfach durchzuschalten und auf den Wechselschalter 109 anzulegen oder auf die gestrichelte Umwegleitung 119 zu legen, um den Schalter 106 direkt anzusteuern.

Fig. 5 zeigt eine bevorzugte Ausführungsform der Steuerung 111 von Fig. 4. Die Induktivitätsstromerfassungseinrichtung 1112 von Fig. 4 umfasst einen ersten Strommesswiderstand 11120, einen Rückkopplungswiderstand $R_1$ 11121, einen ersten Operationsverstärker OV1 11122 sowie eine Referenzspannungsquelle 11123. Ein nicht mit der negativen Ausgangsschiene 116 verbundener Knoten der Referenzspannungsquelle 11123 ist mit einem Plus-Eingang des Operationsverstärkers 11122 verbunden. Dagegen ist ein Knoten, an dem der Rückkopplungswiderstand 11121 und der Strommesswiderstand 11120 angekoppelt sind, mit einem negativen Eingang, also dem Minus-Eingang des Operationsverstärkers 11122 verbunden.

Die Ausgangsspannungserfassungseinrichtung 11111 von Fig. 4 umfasst zunächst einen Spannungsteiler mit einem ersten Widerstand $R_4$ 11110 und einem zweiten Widerstand $R_5$ 11111. Ferner umfasst auch die Ausgangsspannungserfassungseinrichtung einen Operationsverstärker OV2 11112 sowie einen Rückkopplungswiderstand $R_3$ 11113. Der Knoten, an dem der Widerstand $R_4$ 11110 und der Widerstand $R_5$ 11111 mit dem Rückkopplungswiderstand $R_3$ 11113 verbunden sind, ist mit einem negativen oder Minus-Eingang des Operationsverstärkers OV2 11112 verbunden, während der Knoten der Referenzspannungsquelle 11123, der nicht mit der negativen Ausgangsschiene 116 verbunden ist, mit dem positiven Eingang oder Plus-Eingang des Operationsverstärkers $OV_2$ 11112 verbunden ist.

Die Elemente mit den führenden Ziffern "1111" bilden somit die Ausgangsspannungserfassungseinrichtung 1111 von Fig. 4, während die Elemente mit den führenden Ziffern "1112" die Induktivitätsstromerfassungseinrichtung 1112 von Fig. 4 bilden. Es sei darauf hingewiesen, dass die Referenzspannungsquelle sowohl innerhalb der Induktivitätsstromerfassungseinrichtung 1112 als auch in der Ausgangsspannungserfassungseinrichtung 1111 verwendet wird.

Aufgrund der Beschaltung des Operationsverstärkers OV2 mit den Widerständen $R_4$, $R_5$ und $R_3$ wird ein zu der Ausgangsspannung $U_{SR}$ proportionales Signal invertiert, wobei dem invertierten Signal eine Referenzspannung $U_{ref}$ 1123 hinzu addiert wird. Dies führt dazu, dass das Ausgangsspannungserfassungssignal $U_{Aa}$ einen gegenüber dem zu erfassenden Ausgangsspannungssignal $U_{SR}$ invertierten Zeitverlauf hat, jedoch gleichzeitig wie $U_{SR}$ einen positiven Pegel hat, was durch die "Verschiebung nach oben" aufgrund der Addierer-Funktionalität des Operationsverstärkers 11112 (wegen der Beschaltung mit $U_{ref}$) bewirkt wird.

Hingegen ist das Stromerfassungssignal $U_{Da}$ ein Signal, das direkt proportional zu dem Verlauf des Stroms $I_D$ durch die Induktivität 100 ist. Dies ist der Fall, da der Strom $I_D$ bzw. ein aufgrund der Widerstandsverhältnisse von $R_{sh}$ und $R_2$ fließender Strom $i_{R2}$ direkt proportional zum Strom durch die Induktivität 100 $I_D$ ist.

Aus Fig. 5 ist zu sehen, dass die beiden Widerstände $R_{sh}$ und $R_2$ nicht verbunden sind. Die an dem Widerstand $R_{sh}$ abfallende Spannung wird durch den Operationsverstärker $OV_1$ unter Berücksichtigung der Rückkopplungswiderstände $R_1$ und $R_2$ in das Stromerfassungssignal $U_{Da}$ abgebildet, das somit direkt proportional zu dem Strom $i_{Rsh}$ ist und damit direkt proportional zu dem Strom $I_D$ ist, der durch die Spule 100 fließt.

Nachfolgend wird anhand von Fig. 6 die Funktionalität des erfindungsgemäßen Reglerkonzepts dargestellt. In Fig. 6 zeigt ein erster Signalverlauf 601 einen schematisch gezeigten Zeitverlauf der Ausgangsspannung $U_A$ bzw. $U_{SR}$. Das Bezugszeichen 602 bezeichnet dagegen den Verlauf des Spannungserfassungssignals $U_{Aa}$ 1119, das, wie es aus Fig. 6 zu sehen ist, negativ proportional zu $U_A$ ist. Dies bedeutet mit anderen Worten, dass dann, wenn $U_A$ steigt, die Spannung $U_{Aa}$ 602 fällt und umgekehrt. Ferner ist in Fig. 6 bei 603 das Stromerfassungssignal $U_{Da}$ eingezeichnet, das direkt proportional zu dem Strom durch die Spule 100 ist.

Das Bezugszeichen 604 bezeichnet das Steuersignal $U_{St}$, das in Fig. 5 oder Fig. 4 auch mit 1120 bezeichnet ist, wobei die Dimensionierung des Wechselschalters 109 beispielsweise oder des Ladeschalters 106 so ist, dass bei hohem Potential des Steuersignals 604 der Schalter geschlossen wird, also eingeschaltet wird, während bei niedrigem Potential des Signals 604 der Schalter geöffnet ist, also sehr hochohmig ist.

Fig. 6 zeigt ferner den Zustand des Reset-Eingangs des Registers 1115, das vorzugsweise als Schalteransteuerungseinrichtung verwendet wird. Das Register 1115 wird nachfolgend noch anhand von Fig. 7 erläutert. Der Reset-Zustand des Registers ist der Zustand des Ausgangs, der sich nach Aktivierung des Reset-Eingangs einstellt. Das ist in der Regel der "Low"-Zustand.

Ferner zeigt Fig. 6 einen schematischen Zeitverlauf eines Komparatorausgangssignals, das von einem Komparator 1113 stammt, der dann, wenn die Gleichheitsbedingung erfüllt ist, einen Spannungspuls ausgibt, der in Fig. 6 beispielhaft als Diracimpuls gezeichnet ist. Der Verlauf der Komparator-Ausgangsspannung $U_k$ ist in Fig. 6 mit 606 bezeichnet. Schließlich zeigt Fig. 6 noch den Zeitverlauf des Takts $\phi$ 607 in zeitlicher Synchronität zu den Signalen 601 bis 606.

Bei der nachfolgenden Erläuterung der Funktionalität anhand der Zeitverläufe 601 bis 607 in Fig. 6 wird davon ausgegangen, dass der Schaltregler bereits hochgefahren ist, wie es beispielsweise anhand der Fig. 2 und 3a erläutert worden ist. Zu einem Zeitpunkt, zu dem der Schalter 106 eingeschaltet wird, und der in Fig. 6 mit $t_1$ bezeichnet ist, war der Strom durch die Drossel gerade auf einen Minimum. Dies war der Fall, da der Ladeschalter die Spannungsquelle 10, 12 von der Diode abgeklemmt hatte und somit lediglich die Drossel 100 aufgrund der in ihr gespeicherten magnetischen Energie Strom abgegeben hat, der nach und nach abgenommen hat. Wie es ausgeführt worden ist, ist dann, wenn der Schalter 106 offen ist, der einzige Ladestrom für den Kondensator 102 der von der Drossel über die Diode in den Knoten 114 fließende Strom. Wenn der Schalter wieder eingeschaltet wird, steigt der Strom wieder an, wie es durch die steigenden Flanken im Signal 603 zu sehen ist. Dann, wenn der Schalter zu einem Zeitpunkt $t_2$ wieder abgeschaltet wird, fällt der Strom durch die Spule wieder ab, da sich das magnetische Feld, das in der Spule gespeichert ist, langsam abbaut, wie es durch die fallenden Flanken im Signal 603 zu sehen ist.

Die Ausgangsspannung, die durch den Zeitverlauf 601 lediglich skizzenhaft hinsichtlich ihrer Anstiegcharakteristika und Abfallcharakteristika dargestellt ist, fällt zum Zeitpunkt des Einschaltens des Takts noch eine Zeit lang weiter ab, solange der Drosselstrom kleiner als der Laststrom ist. Da der Drosselstrom nach dem Einschalten ansteigt, wird er irgendwann größer als der Laststrom, wodurch die Spannung $U_{SR}$ an $C_S$ wieder zunimmt. Erreicht der Strom den vom Regler geforderten Wert, dann bewirkt der Vergleich des Komparators das Abschalten des Schalters. Dadurch sinkt der Drosselstrom wieder. Die Spannung $U_{SR}$ steigt jedoch weiter an, solange der Drosselstrom größer als der Laststrom ist. Sinkt der Drosselstrom unter den Laststrom, dann beginnt die Spannung wieder zu fallen. Ein weitere Taktpuls startet den beschriebenen Zyklus wieder von vorne.

Das Spannungserfassungssignal $U_{Aa}$ hat einen gegen über dem Ausgangsspannungssignal $U_A$ invertierten Verlauf, so dass das Ausgangsspannungserfassungssignal 602 dann ein Maximum hat, wenn das Ausgangsspannungssignal ein Minimum hat und umgekehrt.

Bei dem in Fig. 5 gezeigten Ausführungsbeispiel mit einem Register als Schalteransteuerungssignal bleibt der Reset-Zustand so lange bestehen, bis von dem Komparator zu einem Zeitpunkt $t_3$, bei dem der Verlauf des Spannungserfassungssignals 602 erneut den Verlauf des Stromerfassungssignals 603 schneidet, wieder ein Komparatorsignal zum Register 1115 gegeben wird, derart, dass der Reset-Zustand, wie es durch den Zeitverlauf 605 gezeigt ist, an dem Register beendet wird. Das Register ist dann nach dem Zeitpunkt $t_3$ wieder bereit, den Q-Ausgang in einen hohen Zustand zu bringen, wenn am S-Eingang wieder z. B. eine positive Taktflanke aufgrund des Takts 607 anliegt. Das Register 1115 wird bei dem bevorzugten Ausführungsbeispiel der vorliegenden Erfindung somit in der Zeitdauer von $t_2$ bis $t_3$ gesperrt, was in jedem Fall sicherstellt, dass der Schalter ausgeschaltet bleibt. Die tatsächliche Ausschaltzeit ist jedoch, wie es anhand von Fig. 6 zu sehen ist, länger als die Zeitdauer zwischen $t_2$ und $t_3$. Ferner ist der Reset-Zustand des Registers dann vorhanden, wenn das Spannungserfassungssignal pegelmäßig kleiner als das Stromerfassungssignal ist. Dagegen ist das Reset-Eingangs-Signal nicht aktiv. So wird also ein Steuern des Schalters bewirkt, wenn das Spannungserfassungssignal 602 größer als Stromerfassungssignal 603 ist.

Das Register 115 wird insbesondere deswegen bevorzugt, weil es dann, wenn die Arbeitstaktfrequenz $f_T$ nicht derart dimensioniert ist, dass pro jeder Taktperiodendauer $T_T$ der Regler einmal eingeschaltet wird, ein Durchschalten des Takts verhindert, wenn beispielsweise die Ausgangsspannung noch nicht wieder so weit abgefallen ist, dass sie wieder erhöht werden müsste bzw. dass ein weiterer Strom von der Quelle 10, 12 nötig ist. Dies liegt daran, dass dann, wenn das Spannungserfassungssignal 602 kleiner als das Stromerfassungssignal 603 ist, das Register im Reset-Zustand bleibt und somit eine positive Taktflanke, die im Nicht-Reset-Zustand ein Einschalten des Reglers bewirken würde, nicht durchgelassen wird, so dass keine zu große Erhöhung der Ausgangsspannung $U_A$ durch ständiges Einschalten des Reglers erreicht wird, obgleich die Ausgangslast noch nicht weiter versorgt zu werden braucht.

Bei dem in Fig. 6 gezeigten Ausführungsbeispiel ist das Tastverhältnis, also die Zeitdauer zwischen $t_2$ und $t_1$ bezogen auf die Takt-Periodendauer $T_T$, kleiner als 50% gewählt. Aus Fig. 6 ist jedoch zu sehen, dass die Taktzeitdauer ohne weiteres erhöht werden kann, ohne dass Probleme entstehen. Eine Erhöhung der Zeitdauer zwischen $t_1$ und $t_2$ führt dazu, dass der Schalter länger geschlossen bleibt, dass also pro Takt mehr Energie von der Quelle 10, 12 dem Schaltregler (und damit der Last) zugeführt wird. Eine kleiner werdende Ausgangsspannung, also eine insgesamte "Vertikalverschiebung" des Ausgangsspannungsverlaufs $U_A$ nach unten, wie es durch einen Pfeil 610 angedeutet ist, würde unmittelbar aufgrund der invertierenden Erzeugung des Spannungserfassungssignals zu einem insgesamten "Vertikalanstieg" des Signals 602 führen, wie es durch einen Pfeil 611 angedeutet ist. Damit würde der Schnittpunkt zwischen der Spannung und dem Strom aufgrund der endlichen Steilheit des Signalverlaufs 602 im Bereich des Schnittpunkts mit dem Signalverlauf 603 weiter in Richtung $t_3$ verschoben werden, so dass damit automatisch die Einschaltdauer, also die Zeitdauer zwischen $t_2$ und $t_1$ ansteigt, da ja $t_1$ aufgrund des Taktes festgelegt ist.

Für die Betrachtung wird angenommen, dass sich der Stromverlauf nicht ändert, wenn sich die Ausgangsspannung ändert. Dies ist in der Praxis nicht der Fall, dient jedoch zum Verständnis der Funktionalität der Erfindung. Wenn also der Verlauf des Spannungserfassungssignals 602 angehoben wird, so wird der Verlauf des Spannungserfassungssignals eine gestrichelte Fortsetzung des Stromverlaufs, die mit 612 bezeichnet ist, ebenfalls irgendwann schneiden. Der erfindungsgemäße Regler ist ausgebildet, immer dann den Schalter wieder zu öffnen, wenn es einen Schnittpunkt zwischen Spannungserfassungssignal 602 (das gemäß dem Pfeil 611 nach oben geschoben worden ist) und der gestrichelten Fortsetzung 612 des Stromverlaufs gibt. Nachdem das Spannungserfassungssignal monoton fallend ist in dem interessierenden Bereich, bei dem der Schalter geschlossen werden soll, und das Stromerfassungssignal aufgrund der gestrichelten Fortsetzung 612 monoton steigend ist, wird es immer irgendwann zu einem Schnittpunkt kommen, unabhängig davon, ob das Tastverhältnis 50% oder erheblich darüber liegt, wie beispielsweise bei 80 oder 90%.

Wird dagegen die Ausgangsspannung höher als sie sein sollte, so führt dies dazu, dass der Signalverlauf 601 in vertikaler Richtung entgegengesetzt zu dem Pfeil 610 verschoben wird, was unmittelbar dazu führt, dass der Signalverlauf 602 entgegengesetzt zum Pfeil 611 nach unten verschoben wird. Dies bedeutet, dass die Gleichheit zwischen dem Spannungserfassungssignal 602 und dem Stromerfassungssignal 603 zu einem früheren Zeitpunkt als $t_2$ erreicht wird, da ja, wie es ausgeführt worden ist, das Stromerfassungssignal in dem interessierenden Bereich, bei dem der Schalter wieder geöffnet werden muss, monoton steigend ist. Damit wird eine kürzere Einschaltzeitdauer des Schalters erreicht, was dazu führt, dass die Ausgangsspannung wieder sinken wird. Die Ausgangsspannung wird daher im Bereich eines Ausgangssollwerts $U_{As}$ bleiben, der durch Dimensionierung der Widerstände $R_1$ bis $R_5$ und $R_{sh}$ sowie durch Einstellung der Referenzspannungsquelle 11123 festlegbar ist.

Das erfindungsgemäße Konzept der in Fig. 4 und 5 dargestellten Steuerungsvorrichtung hat, wie es ausgeführt worden ist, den Vorteil, dass der Maximal-Strom der Drossel nicht überschritten wird.

Ein weiterer Vorteil besteht darin, dass der Spannungsverstärker, der das Abbild der Ausgangsspannung erzeugt, also der Operationsverstärker 11112 mit entsprechender Beschaltung, kein Filter am Ausgang benötigt, da die Welligkeit der Ausgangsspannung nicht stört sondern positiv wirkt.

Ferner wird durch die Form der Ausgangsspannung bzw, deren Abbild nach dem Spannungsverstärker zur Erzeugung von $U_{Aa}$ in Fig. 5 ein größerer stabiler Arbeitsbereich der Stromregelschleife erhalten. Während bei konventionellen Reglern der stabile Arbeitsbereich ohne weitere Maßnahmen bis zu einem Tastverhältnis um etwa 50% geht, wird beim neuen Konzept der Bereich einer stabilen Stromregelung immer größer als 50% sein und kann durch entsprechende Dimensionierung theoretisch bis 100% erweitert werden. In der Praxis wird es bevorzugt, etwa bis zu Werten von 80% bis 90% zu gehen.

Ferner wird es bevorzugt, sämtliche aktiven Elemente, wie die beiden Operationsverstärker 11112 und 11122 sowie das Register 11115 und die Referenzspannungswelle 11123 mit $U_{SR}$ zu "versorgen", derart, dass keine externen Komponenten zum Erzeugen einer Spannung benötigt werden. Dies ist insbesondere unkritisch, da die Komponenten Operationsverstärker, Komparator, Register und Referenzspannungsquelle, die optional auch weggelassen werden könnte, Bauelemente sind, die alle mit relativ niedrigen Betriebsspannungen arbeiten können, so dass auch beim Anlaufen ab einem bestimmten Wert der Ausgangsspannung $U_{SR}$, der noch geringer ist als die von dem Schaltregler zu erzeugende Betriebs-Ausgangsspannung, ein stabiler und definierter Betrieb erfolgt. Damit ist gegenüber einer Steuerungsvorrichtung mit externer Versorgung die Anzahl der Komponenten reduziert. Ferner besteht keine Zeitverzögerung beim erfindungsgemäßen Regler, da derselbe sobald $U_{SR}$ die minimale Betriebspannung der Operationsverstärker, des Komparators, des Registers und der Betriebsspannungsquelle erreicht, arbeitet. Damit kann die erfindungsgemäße Steuerungsvorrichtung insbesondere im Hinblick auf die reduzierte Anzahl von Komponenten (hier ist auch das sonst benötigte Filter zum Filtern der Ist-Größe zu nennen) preisgünstig insbesondere in integrierbarer Ausführung hergestellt werden.

Abhängig von den Gegebenheiten kann das erfindungsgemäße Verfahren zum Steuern eines Ladeschalters in einem Schaltregler in Hardware oder in Software implementiert werden. Die Implementierung kann auf einem digitalen Speichermedium, insbesondere einer Diskette oder CD mit elektronisch auslesbaren Steuersignalen erfolgen, die so mit einem programmierbaren Computersystem zusammenwirken können, dass das erfindungsgemäße Verfahren ausgeführt wird. Allgemein besteht die Erfindung somit auch in einem Computer-Programm-Produkt mit einem auf einem maschinenlesbaren Träger gespeicherten Programmcode zur Durchführung des erfindungsgemäßen Verfahrens, wenn das Computer-Programm-Produkt auf einem Rechner abläuft. In anderen Worten ausgedrückt kann die Erfindung somit als ein Computer-Programm mit einem Programmcode zur Durchführung des Verfahrens realisiert werden, wenn das Computer-Programm auf einem Computer abläuft.

## Patentansprüche

1. Steuerungsvorrichtung (111) zum Steuern eines Ladeschalters (106) in einem Schaltregler mit einem Netzwerk (101) aus einer Induktivität (100), einer Siebkapazität (102) und einer Diode (104), wobei an der Siebkapazität eine durch das Steuern des Ladeschalters (106) geregelte Ausgangsspannung ($U_{SR}$) zwischen einem ersten Ausgangsknoten (114) und einem zweiten Ausgangsknoten (116) des Schaltreglers ausgebbar ist, wobei der Schaltregler ferner einen ersten Eingangsknoten (110) und einen zweiten Eingangsknoten (112) hat, wobei zwischen den ersten Eingangsknoten (110) und den zweiten Eingangsknoten (112) der Ladeschalter und das Netzwerk seriell geschaltet sind, und wobei der Knoten (118, 116), an dem der Ladeschalter mit dem Netzwerk gekoppelt ist, mit einem Ausgangsknoten (114, 116) kurzgeschlossen ist, mit folgenden Merkmalen:

   einem Taktgeber (1116) zum Bereitstellen eines Betriebstakts;
   einer Einrichtung (1111) zum Erfassen der Ausgangsspannung zwischen dem ersten Ausgangsknoten (114) und dem zweiten Ausgangsknoten (116) des Schaltreglers, um ein Ausgangsspannungserfassungssignal zu erzeugen;
   einer Einrichtung (1112) zum Erfassen eines Stroms durch die Induktivität (100), um ein Stromerfassungssignal zu erhalten,
   wobei die Einrichtung (1111) zum Erfassen der Ausgangsspannung oder die Einrichtung (1112) zum Erfassen des Stroms durch die Induktivität ausgebildet ist, um das Erfassungssignal so zu erzeugen, dass es einen gegenüber einem Zeitverlauf einer zu erfassenden Größe invertierten Zeitverlauf hat, so dass bei einem steigenden zu erfassenden Signal das Erfassungssignal fällt und umgekehrt,
   einem Komparator (1114) zum Vergleichen des Stromerfassungssignals (1118) und des Spannungserfassungssignals (1119), um festzustellen, ob zwischen dem Stromerfassungssignal (1118) und dem Spannungserfassungssignal (1119) eine vorbestimmte Beziehung vorhanden ist; und
   einer Einrichtung (1115) zum Ansteuern des Ladeschalters (106) mit einem Steuersignal (1120), wobei die Einrichtung zum Ansteuern ausgebildet ist,

   um den Schalter (106) ansprechend auf den Betriebstakt (1117) so anzusteuern, dass der Ladeschalter (106) geschlossen wird, und
   um den Schalter (106) ansprechend auf ein Komparatorausgangssignal (1114) zu öffnen, wenn der Komparator (1113) die vorbestimmte Beziehung feststellt.

2.  Steuerung nach Anspruch 1, bei der die vorbestimmte Beziehung eine Gleichheitsbeziehung innerhalb eines Toleranzbereichs ist.

3.  Steuerung nach Anspruch 1 oder 2, bei der die Einrichtung (1111) zum Erfassen der Ausgangsspannung einen Invertierer und einen Addierer zum Addieren eines Referenzsignals (11123) zu einem invertierten Ausgangsspannungssignal aufweist, um das Spannungserfassungssignal (1119) zu erhalten, das bei einer positiven Ausgangsspannung ebenfalls positiv ist, dessen Verlauf jedoch negativ proportional zu dem Verlauf der Ausgangsspannung ist, so dass die Ausgangsspannung zunimmt, wenn das Erfassungssignal abnimmt und umgekehrt.

4.  Steuerungsvorrichtung nach einem der vorhergehenden Ansprüche, bei der die Einrichtung (1112) zum Erfassen des Stroms einen Widerstand ($R_{sh}$) aufweist, der von einem Strom durch die Induktivität (100) durchflossen wird, oder der von einem Strom durchflossen wird, der zu dem Strom durch die Induktivität (100) in einem vorbestimmten Zusammenhang ist.

5.  Steuerungsvorrichtung nach einem der vorhergehenden Ansprüche,
    bei der die Einrichtung (1111) zum Erfassen der Ausgangsspannung ausgebildet ist, um das Erfassungssignal so zu erzeugen, dass eine Welligkeit in dem Erfassungssignal bis zu einer Grenzfrequenz der Welligkeit der erfassten Ausgangsspannung entspricht, wobei die Grenzfrequenz mindestens so groß ist, dass Spektralkomponenten der Ausgangsspannung, die eine Welligkeit der Ausgangsspannung bestimmen, in dem Spannungserfassungssignal innerhalb eines vorbestimmten Toleranzbereichs nicht gedämpft sind.

6.  Steuerungsvorrichtung nach Anspruch 5, bei der der Toleranzbereich 3 dB beträgt.

7.  Steuerungsvorrichtung nach einem der vorhergehenden Ansprüche, bei der die Einrichtung zum Bereitstellen eines Betriebstakts (1117) über eine Durchschalteinrichtung (1115) mit dem Ladeschalter (106) gekoppelt ist, wobei die Durchschalteinrichtung (1115) ausgebildet ist, um nur dann ein Schließen des Schalters durch den Takt zu erlauben, wenn ein Steuersignal (1114) für die Durchschalteinrichtung in einem vorbestimmten Zustand ist.

8.  Steuerungsvorrichtung nach einem der vorhergehenden Ansprüche,
    bei der der Komparator (1113) ausgebildet ist, um ein Steuersignal (1114) für die Durchschalteinrichtung zu liefern, wenn das Stromerfassungssignal (1118) und das Spannungserfassungssignal (1119) die vorbestimmte Beziehung zueinander haben.

9.  Steuerungsvorrichtung nach einem der vorhergehenden Ansprüche,
    bei der die Einrichtung (1115) zum Ansteuern des Ladeschalters (106) ein Register (1115) aufweist, das einen Setzen-Eingang (S), einen Rücksetzen-Eingang (R) und einen Ausgang (Q) aufweist, wobei der Setzen-Eingang mit der Einrichtung (1116) zum Bereitstellen eines Betriebstakts verbunden ist, wobei der Rücksetzen-Eingang mit einem Ausgang des Komparators (1113) verbunden ist, und wobei der Ausgang des Registers (1115) mit einem Steuereingang (107) des Ladeschalters (106) verbunden ist.

10. Steuerungsvorrichtung nach Anspruch 9, bei der die Einrichtung (1112) zum Erfassen eines Stroms durch die Induktivität einen Invertierer aufweist, der einen Messwiderstand (11120), einen Rückkopplungswiderstand (11121) und einen Operationsverstärker (11122) aufweist, wobei der Messwiderstand von dem Strom (100) durch die Induktivität oder von einem Strom, der in einem vorbestimmten Zusammenhang zu dem Strom durch die Induktivität ist, durchflossen wird, so dass eine Ausgangsspannung ($U_{Da}$) des Inverters proportional zu dem Strom durch die Spule ist, derart, dass die Ausgangsspannung ($U_{Da}$) steigt, wenn der Strom steigt und dass die Ausgangsspannung ($U_{Da}$) fällt, wenn der Strom fällt.

11. Steuerungsvorrichtung nach Anspruch 9, bei der ein Eingang des Operationsverstärkers (11122) der Einrichtung (1112) zum Erfassen des Stroms mit einer definierten Referenzspannung (11123) beaufschlagt ist.

12. Steuerungsvorrichtung nach einem der vorhergehenden Ansprüche, bei der die Einrichtung (1111) zum Erfassen der Ausgangsspannung folgende Merkmale aufweist:

    einen ersten Widerstand (11110), der in Serie zu einem zweiten Widerstand (11111) geschaltet ist, wobei die Serienschaltung zwischen einem ersten Knoten (114) und einem zweiten Knoten (116) angeordnet ist, wobei zwischen dem ersten Knoten und dem zweiten Knoten die zu erfassende Ausgangsspannung anliegt, einem weiteren Widerstand (11113), der dort, wo der erste Widerstand (11110) und der zweite Widerstand (11111) verbunden sind, ebenfalls angeschlossen ist und einen Rückkopplungswiderstand für einen Operationsverstärker (11112) bildet, wobei ferner eine Referenzspannung (11123) mit einem Eingang des Operationsverstärkers (11112) gekoppelt ist.

13. Steuerungsvorrichtung nach einem der Ansprüche 1 bis 12, bei der die Einrichtung (1111) zum Erfassen der Ausgangsspannung und die Einrichtung (1112) zum Erfassen des Stroms durch die Induktivität ausgebildet sind, um Erfassungssignale mit vorbestimmten Pegeln zu erzeugen, wobei mittlere Pegel der Erfassungssignale zusammen einen Soll-Ausgangsspannungsniveaubereich festlegen.

14. Steuerungsvorrichtung nach einem der vorhergehenden Ansprüche, bei der die Einrichtung (1116) zum Bereitstellen eines Arbeitstakts ausgebildet ist, um eine solche Taktfrequenz zu haben, dass in einem Taktzyklus der Ladeschalter (106) einmal eingeschaltet und einmal ausgeschaltet wird.

15. Steuerungsvorrichtung nach einem der vorhergehenden Ansprüche, bei der die Einrichtung (1115) zum Ansteuern des Ladeschalters ausgebildet ist, um ansprechend auf eine steigende oder fallende Flanke des Betriebstakts (1117) den Schalter (106) zu schließen.

16. Verfahren zum Steuern eines Ladeschalters (106) in einem Schaltregler mit einem Netzwerk (101) aus einer Induktivität (100), einer Siebkapazität (102) und einer Diode (104), wobei an die Siebkapazität eine durch das Steuern des Ladeschalters (106) geregelte Ausgangsspannung ($U_{SR}$) zwischen einem ersten Ausgangsknoten (114) und einem zweiten Ausgangsknoten (116) des Schaltreglers ausgebbar ist, wobei der Schaltregler ferner einen ersten Eingangsknoten (110) und einen zweiten Eingangsknoten (112) hat, wobei zwischen den ersten Eingangsknoten (110) und den zweiten Eingangsknoten (112) der Ladeschalter und das Netzwerk seriell geschaltet sind, und wobei der Knoten (118, 116), an dem der Ladeschalter mit dem Netzwerk gekoppelt ist, mit einem Ausgangsknoten (114, 116) kurzgeschlossen ist, mit folgenden Schritten:

Bereitstellen (1116) eines Betriebstakts;
Erfassen (1111) der Ausgangsspannung zwischen dem ersten Ausgangsknoten (114) und dem zweiten Ausgangsknoten (116) des Schaltreglers, um ein Ausgangsspannungserfassungssignal zu erzeugen;
Erfassen (1112) eines Stroms durch die Induktivität (100), um ein Stromerfassungssignal zu erhalten, wobei die Ausgangsspannung oder der Strom durch die Induktivität so erfasst werden, dass ein Erfassungssignal einen gegenüber einem Zeitverlauf einer zu erfassenden Größe invertierten Zeitverlauf hat, so dass bei einem steigenden zu erfassenden Signal das Erfassungssignal fällt und umgekehrt,
Vergleichen des Stromerfassungssignals (1118) und des Spannungserfassungssignals (1119), um festzustellen, ob zwischen dem Stromerfassungssignal (1118) und dem Spannungserfassungssignal (1119) eine vorbestimmte Beziehung vorhanden ist; und
Ansteuern des Ladeschalters (106) mit einem Steuersignal (1120), wobei die Einrichtung zum Ansteuern ausgebildet ist,

um den Schalter (106) ansprechend auf den Betriebstakt (1117) so anzusteuern, dass der Ladeschalter (106) geschlossen wird, und
um den Schalter (106) ansprechend auf ein Komparatorausgangssignal (1114) zu öffnen, wenn der Komparator (1113) die vorbestimmte Beziehung feststellt.

17. Computer-Programm mit einem Programmcode zur Durchführung des Verfahrens nach Anspruch 16, wenn das Programm auf einem Computer abläuft.

18. Schaltregler mit folgenden Merkmalen:

einem Ladeschalter (106);
einem Netzwerk (101) mit einer Induktivität (100), einer Siebkapazität (102) und einer Diode (104), wobei an der Siebkapazität eine durch das Steuern des Ladeschalters (106) geregelte Ausgangsspannung ($U_{SR}$) zwischen einem ersten Ausgangsknoten (114) und einem zweiten Ausgangsknoten (116) des Schaltreglers ausgebbar ist,
wobei der Schaltregler ferner einen ersten Eingangsknoten (110) und einen zweiten Eingangsknoten (112) hat, wobei zwischen den ersten Eingangsknoten (110) und den zweiten Eingangsknoten (112) der Ladeschalter und das Netzwerk seriell geschaltet sind, und wobei der Knoten (118, 116), an dem der Ladeschalter mit dem Netzwerk gekoppelt ist, mit einem Ausgangsknoten (114, 116) kurzgeschlossen ist,

einem Taktgeber (1116) zum Bereitstellen eines Betriebstakts;

einer Einrichtung (1111) zum Erfassen der Ausgangsspannung, um ein Ausgangsspannungserfassungssignal zu erzeugen;

einer Einrichtung (1112) zum Erfassen eines Stroms durch die Induktivität (100), um ein Stromerfassungssignal zu erhalten,

wobei die Einrichtung (1111) zum Erfassen der Ausgangsspannung oder die Einrichtung (1112) zum Erfassen des Stroms durch die Induktivität ausgebildet ist, um das Erfassungssignal so zu erzeugen, dass es einen gegenüber einem Zeitverlauf einer zu erfassenden Größe invertierten Zeitverlauf hat, so dass bei einem steigenden zu erfassenden Signal das Erfassungssignal fällt und umgekehrt,

einem Komparator (1114) zum Vergleichen des Stromerfassungssignals (1118) und des Spannungserfassungssignals (1119), um festzustellen, ob zwischen dem Stromerfassungssignal (1118) und dem Spannungserfassungssignal (1119) eine vorbestimmte Beziehung vorhanden ist; und

einer Einrichtung (1115) zum Ansteuern des Ladeschalters (106) mit einem Steuersignal (1120), wobei die Einrichtung zum Ansteuern ausgebildet ist,

um den Schalter (106) ansprechend auf den Betriebstakt (1117) so anzusteuern, dass der Ladeschalter (106) geschlossen wird, und

um den Schalter (106) ansprechend auf ein Komparatorausgangssignal (1114) zu öffnen, wenn der Komparator (1113) die vorbestimmte Beziehung feststellt.

**Claims**

1. A control device (111) for controlling a charging switch (106) in a switching regulator with a network (101) of inductance (100), filter capacitance (102) and diode (104), wherein an output voltage ($U_{SR}$) regulated by controlling the charging switch (106) can be output at the filter capacitance between a first output node (114) and a second output node (116) of the switching regulator, wherein the switching regulator further comprises a first input node (110) and a second input node (112), wherein the charging switch and the network are connected in series between the first input node (110) and the second input node (112), and wherein the node (118, 116), to which the charging switch with the network is coupled, is short-circuited to an output node (114, 116), comprising:

   a clock generator (1116) for providing an operating clock;
   a means (1111) for detecting the output voltage between the first output node (114) and the second output node (116) of the switching regulator to generate an output voltage detection signal;
   a means (1112) for detecting a current through the inductance (100) to obtain a current detection signal,
   wherein the means (1111) for detecting the output voltage or the means (1112) for detecting the current is formed by the inductance to generate the detection signal such that the same has a time curve inverted in relation to a time curve of an amount to be detected, so that the detection signal falls with a rising signal to be detected and vice versa,
   a comparator (1114) for comparing the current detection signal (1118) and the voltage detection signal (1119) to determine whether a predetermined relation exists between the current detection signal (1118) and the voltage detection signal (1119); and
   a means (1115) for controlling the charging switch (106) with a control signal (1120), wherein the means for controlling is formed

      to control the switch (106) in response to the operating clock (1117) such that the charging switch (106) is closed, and
      to open the switch (106) in response to a comparator output signal (1114) when the comparator (1113) determines the predetermined relation.

2. The control according to claim 1, wherein the predetermined relation is an equality relation within a tolerance range.

3. The control according to claim 1 or 2, wherein the means (1111) for detecting the output voltage comprises an inverter and an adder for adding a reference signal (11123) to an inverted output voltage signal to obtain the voltage detection signal (1119), which is also positive in a positive output voltage, whose curve, however, is negatively proportional to the curve of the output voltage, so that the output voltage increases when the detection signal decreases and vice versa.

4. The control device according to one of the previous claims, wherein the means (1112) for detecting the current comprises a resistor ($R_{sh}$), wherein current through the inductance (100) or current, which is in a predetermined context to the current through the inductance (100), flows through the same.

5. The control device according to one of the previous claims, wherein the means (1111) for detecting the output voltage is formed to generate the detection signal such that ripples in the detection signal up to a cut-off frequency correspond to ripples of the detected output voltage, wherein the cut-off frequency is at least so high that spectral components of the output voltage determining ripples of the output voltage are not attenuated in the voltage detection signal within a predetermined tolerance range.

6. The control device according to claim 5, wherein the tolerance range is 3 dB.

7. The control device according to one of the previous claims, wherein the means for providing an operating clock (1117) is coupled to the charging switch (106) via a switching means (1115), wherein the switching means (1115) is formed to allow closing the switch by the clock only when a control signal (1114) for the switching means is in a predetermined state.

8. The control device according to one of the previous claims, wherein the comparator (1113) is formed to provide a control signal (1114) for the switching means when the current detection signal (1118) and the voltage detection signal (1119) have the predetermined relation to each other.

9. The control device according to one of the previous claims, wherein the means (1115) for controlling the charging switch (106) has a register (1115) having a set input (S), a reset input (R) and an output (Q), wherein the set input is connected to the means (1116) for providing an operating clock, wherein the reset input is connected to an output of the comparator (1113), and wherein the output of the register (1115) is connected to a control input (107) of the charging switch (106).

10. The control device according to claim 9, wherein the means (1112) for detecting a current through the inductance comprises an inverter having a measuring resistor (11120), a feedback resistor (11121) and an operational amplifier (11122), wherein current (100) through the inductance or current being in a predetermined context to the current through the inductance flows through the measuring resistor,
so that an output voltage ($U_{Da}$) of the inverter is proportional to the current through the coil, such that the output voltage ($U_{Da}$) rises when the current rises and that the output voltage ($U_{Da}$) falls when the current falls.

11. The control device according to claim 9, wherein the input of the operational amplifier (11122) of the means (1112) for detecting the current is provided with a defined reference voltage (11123).

12. The control device according to one of the previous claims, wherein the means (1111) for detecting the output voltage comprises:
a first resistor (11110) connected in series to a second resistor (11111), wherein the series connection is disposed between a first node (114) and a second node (116), wherein the output voltage to be detected is applied between the first node and the second node,
a further resistor (1113), which is also connected where the first resistor (1110) and the second resistor (1111) are connected, and forms a feedback resistor for an operational amplifier (11112), wherein further a reference voltage (11123) is coupled to an input of the operational amplifier (11112).

13. The control device according to one of claims 1 to 12, wherein the means (1111) for detecting the output voltage and the means (1112) for detecting the current through the inductance are formed to generate detection signals with predetermined levels, wherein average levels of the detection signals together determine a set output voltage level range.

14. The control device according to one of the previous claims, wherein the means (1116) for providing an operating clock is formed to have such a clock frequency that the charging switch (106) is switched on once and switched off once in one clock cycle.

15. The control device according to one of the previous claims, wherein the means (1115) for controlling the charging switch is formed to close the switch (106) in response to a rising or falling edge of the operating clock (1117).

**16.** A method for controlling a charging switch (106) in a switching regulator with a network (101) of an inductance (100), a filter capacitance (102) and a diode (104), wherein an output voltage ($U_{SR}$) regulated by controlling the charging switch (106) can be output at the filter capacitance between a first output node (114) and a second output node (116) of the switching regulator, wherein the switching regulator further comprises a first input node (110) and a second input node (112), wherein the charging switch and the network are connected in series between the first input node (110) and the second input node (112), and wherein the node (118, 116), to which the charging switch with the network is coupled, is short-circuited to an output node (114, 116), comprising the steps of:

providing (1116) an operating clock;

detecting (1111) the output voltage between the first output node (114) and the second output node (116) of the switching regulator to generate an output voltage detection signal;

detecting (1112) a current through the inductance (100) to obtain a current detection signal,

wherein the output voltage or the current through the inductance are detected such that a detection signal has a time curve inverted in relation to a time curve of an amount to be detected, so that the detection signal falls with a rising signal to be detected and vice versa,

comparing the current detection signal (1118) and the voltage detection signal (1119) in order to determine whether a predetermined relation exists between the current detection signal (1118) and the voltage detection signal (1119); and

controlling the charging switch (106) with a control signal (1120), wherein the means for controlling is formed

to control the switch (106) in response to the operating clock (1117) such that the charging switch (106) is closed, and

to open the switch (106) in response to a comparator output signal (1114) when the comparator (1113) determines the predetermined relation.

**17.** A computer program with a program code for performing the method according to claim 16 when the program runs on a computer.

**18.** A switching regulator, comprising:

a charging switch (106);

a network (101) with inductance (100), filter capacitance (102) and diode (104), wherein an output voltage ($U_{SR}$) regulated by controlling the charging switch (106) can be output at the filter capacitance between the first output node (114) and the second output node (116) of the switching regulator,

wherein the switching regulator further comprises a first input node (110) and a second input node (112), wherein the charging switch and the network are connected in series between the first input node (110) and the second input node (112), and wherein the node (118, 116), to which the charging switch with the network is coupled, is short-circuited to an output node (114, 116),

a clock generator (1116) for providing an operating clock;

a means (1111) for detecting the output voltage to generate an output voltage detection signal;

a means (1112) for detecting a current through the inductance (100) to obtain a current detection signal,

wherein the means (1111) for detecting the output voltage or the means (1112) for detecting the current is formed by the inductance to generate the detection signal such that the same has a time curve inverted in relation to a time curve of an amount to be detected, so that the detection signal falls with a rising signal to be detected and vice versa,

a comparator (1114) for comparing the current detection signal (1118) and the voltage detection signal (1119) to determine whether a predetermined relation exists between the current detection signal (1118) and the voltage detection signal (1119); and

a means (1115) for controlling the charging switch (106) with a control signal (1120), wherein the means for controlling is formed

to control the switch (106) in response to the operating clock (1117) such that the charging switch (106) is closed, and

to open the switch (106) in response to a comparator output signal (1114) when the comparator (1113) determines the predetermined relation.

**Revendications**

1. Dispositif de commande (111) destiné à commander un commutateur de charge (106) dans un régulateur à découpage avec un réseau (101) composé d'une inductance (100), une capacité de filtrage (102) et une diode (104), à la capacité de filtrage pouvant être sortie une tension de sortie ($U_{SR}$), réglée par la commande du commutateur de charge (106), entre un premier noeud de sortie (114) et un deuxième noeud de sortie (116) du régulateur à découpage, le régulateur à découpage ayant, par ailleurs, un premier noeud d'entrée (110) et un deuxième noeud d'entrée (112), entre le premier noeud d'entrée (110) et le deuxième noeud d'entrée (112) étant connectés en série le commutateur de charge et le réseau, et le noeud (118, 116) auquel le commutateur de charge est couplé au réseau étant court-circuité avec un noeud de sortie (114, 116), aux caractéristiques suivantes :

   un générateur de cycles d'horloge (1116) destiné à mettre à disposition un cycle de fonctionnement ;
   un dispositif (1111) destiné à détecter la tension de sortie entre le premier noeud de sortie (114) et le deuxième noeud de sortie (116) du régulateur à découpage, pour générer un signal de détection de tension de sortie ;
   un dispositif (1112) destiné à détecter un courant passant par l'inductance (100), pour obtenir un signal de détection de courant,
   le dispositif (1111) destiné à détecter la tension de sortie ou le dispositif (1112) destiné à détecter le courant passant par l'inductance étant réalisé de manière à générer le signal de détection de sorte qu'il ait, par rapport à une évolution dans le temps d'une grandeur à détecter, une évolution dans le temps inversée, de sorte que, à signal à détecter montant, le signal de détection tombe, et inversement,
   un comparateur (1114) destiné à comparer le signal de détection de courant (1118) et le signal de détection de tension (1119), pour constater s'il est présent un rapport prédéterminé entre le signal de détection de courant (1118) et le signal de détection de tension (1119) ; et
   un dispositif (1115) destiné à activer le commutateur de charge (106) par un signal de commande (1120), le dispositif destiné à activer étant réalisé de manière à

   activer le commutateur (106) en réaction au cycle de fonctionnement (1117) de sorte que le commutateur de charge (106) soit fermé, et
   ouvrir le commutateur (106) en réaction à un signal de sortie de comparateur (1114) lorsque le comparateur (1113) constate le rapport prédéterminé.

2. Commande selon la revendication 1, dans laquelle le rapport prédéterminé est un rapport d'égalité dans une plage de tolérance.

3. Commande selon la revendication 1 ou 2, dans laquelle le dispositif (1111) destiné à détecter la tension de sortie présente un inverseur et un additionneur destiné à additionner un signal de référence (11123) à un signal de tension de sortie inversé, pour obtenir le signal de détection de tension (1119) qui, en cas de tension de sortie positive, est également positif, mais dont l'évolution est toutefois négativement proportionnelle à l'évolution de la tension de sortie, de sorte que la tension de sortie augmente lorsque le signal de détection diminue, et inversement.

4. Dispositif de commande selon l'une des revendications précédentes, dans lequel le dispositif (1112) destiné à détecter le courant présente une résistance ($R_{sh}$) qui est traversée par un courant passant par l'inductance (100) ou qui est traversée par un courant ayant un rapport prédéterminé avec le courant passant par l'inductance (100).

5. Dispositif de commande selon l'une des revendications précédentes, dans lequel le dispositif (1111) destiné à détecter la tension de sortie est réalisé de manière à générer le signal de détection de sorte qu'une ondulation dans le signal de détection corresponde, jusqu'à une fréquence limite, l'ondulation de la tension de sortie détectée, la fréquence limite étant au moins aussi grande que les composantes spectrales de la tension de sortie qui déterminent une ondulation de la tension de sortie ne soient pas atténuées dans une plage de tolérance prédéterminée dans le signal de détection de tension.

6. Dispositif de commande selon la revendication 5, dans lequel la plage de tolérance est de 3 dB.

7. Dispositif de commande selon l'une des revendications précédentes, dans lequel le dispositif destiné à mettre à disposition un cycle de fonctionnement (1117) est couplé, par l'intermédiaire d'un dispositif de connexion (1115), au commutateur de charge (106), le dispositif de connexion (1115) étant réalisé de manière à ne permettre une fermeture du commutateur par le cycle d'horloge que lorsqu'un signal de commande (1114) pour le dispositif de connexion se trouve dans un état prédéterminé.

**8.** Dispositif de commande selon l'une des revendications précédentes, dans lequel le comparateur (1113) est réalisé de manière à fournir un signal de commande (1114) pour le dispositif de connexion lorsque le signal de détection de courant (1118) et le signal de détection de tension (1119) présentent le rapport prédéterminé entre eux.

**9.** Dispositif de commande selon l'une des revendications précédentes, dans lequel le dispositif (1115) destiné à activer le commutateur de charge (106) présente un registre (1115) qui présente une entrée de réglage (S), une entrée de remise à zéro (H) et une sortie (Q), l'entrée de réglage étant reliée au dispositif (1116) destiné à mettre à disposition un cycle de fonctionnement, l'entrée de remise à zéro étant reliée à une sortie du comparateur (1113) et la sortie du registre (1115) étant reliée à une entrée de commande (107) du commutateur de charge (106).

**10.** Dispositif de commande selon la revendication 9, dans lequel le dispositif (1112) destiné à détecter un courant passant par l'inductance présente un inverseur présentant une résistance de mesure (11120), une résistance de couplage rétroactif (11121) et un amplificateur opérationnel (11122), la résistance de mesure étant traversée par le courant (100) passant par l'inductance ou par un courant qui a un rapport prédéterminé avec le courant passant par l'inductance, de sorte qu'une tension de sortie ($U_{Da}$) de l'inverseur soit proportionnelle au courant passant par la bobine, de sorte que la tension de sortie ($U_{Da}$) augmente lorsque le courant augmente et que la tension de sortie ($U_{Da}$) tombe lorsque le courant tombe.

**11.** Dispositif de commande selon la revendication 9, dans lequel une entrée de l'amplificateur opérationnelle (11122) du dispositif (1112) destiné à détecter le courant est soumise à une tension de référence définie (11123).

**12.** Dispositif de commande selon l'une des revendications précédentes, dans lequel le dispositif (1111) destiné à détecter la tension de sortie présente les caractéristiques suivantes :

une première résistance (11110) qui est connectée en série avec une deuxième résistance (11111), le circuit sériel étant disposé entre un premier noeud (114) et un deuxième noeud (116), entre le premier noeud et le deuxième noeud étant présente la tension de sortie à détecter, une autre résistance (111113) qui est également raccordée à l'endroit où sont reliées la première résistance (11110) et la deuxième résistance (11111) et qui constitue une résistance de couplage réactif pour un amplificateur opérationnel (11112), une tension de référence (11123) étant, par ailleurs, couplée à une entrée de l'amplificateur opérationnel (11112).

**13.** Dispositif de commande selon l'une des revendications 1 à 12, dans lequel le dispositif (1111) destiné à détecter la tension de sortie et le dispositif (1112) destiné à détecter le courant passant par l'inductance sont réalisés de manière à générer des signaux de détection avec des niveaux prédéterminés, les niveaux moyens des signaux de détection fixant, ensemble, une plage de niveaux de tension de sortie de consigne.

**14.** Dispositif de commande selon l'une des revendications précédentes, dans lequel le dispositif (1116) destiné à mettre à disposition un cycle de fonctionnement est réalisé de manière à avoir une fréquence d'horloge telle que le commutateur de charge (106) soit enclenché une fois et déclenché une fois dans un cycle d'horloge.

**15.** Dispositif de commande selon l'une des revendications précédentes, dans lequel le dispositif (1115) destiné à activer le commutateur de charge est réalisé de manière à fermer le commutateur (106) en réaction à un flanc montant ou tombant du cycle de fonctionnement (1117).

**16.** Procédé pour commander un commutateur de charge (106) dans un régulateur à découpage avec un réseau (101) composé d'une inductance (100), d'une capacité de filtrage (102) et d'une diode (104), à la capacité de filtrage pouvant être sortie une tension de sortie ($U_{SR}$), réglée par la commande du commutateur de charge (106), entre un premier noeud de sortie (114) et un deuxième noeud de sortie (116) du régulateur à découpage, le régulateur à découpage ayant, par ailleurs, un premier noeud d'entrée (110) et un deuxième noeud d'entrée (112), entre le premier noeud d'entrée (110) et le deuxième noeud d'entrée (112) étant connectés en série le commutateur de charge et le réseau, et le noeud (118, 116) auquel le commutateur de charge est couplé au réseau étant court-circuité avec un noeud de sortie (114, 116), aux étapes suivantes consistant à :

mettre à disposition (1116) un cycle de fonctionnement ;
détecter (1111) la tension de sortie entre le premier noeud de sortie (114) et le deuxième noeud de sortie (116)

**EP 1 647 087 B1**

du régulateur à découpage, pour générer un signal de détection de tension de sortie ;

détecter (1112) un courant passant par l'inductance (100), pour obtenir un signal de détection de courant,

la tension de sortie ou le courant passant par l'inductance étant détectés de sorte qu'un signal de détection ait une évolution dans le temps inversée par rapport à une évolution dans le temps d'une grandeur à détecter, de sorte que, en cas d'un signal à détecter montant, le signal de détection tombe, et inversement,

comparer le signal de détection de courant (1118) et le signal de détection de tension (1119), pour constater s'il est présent un rapport prédéterminé entre le signal de détection de courant (1118) et le signal de détection de tension (1119) ; et

activer le commutateur de charge (106) par un signal de commande (1120), le dispositif destiné à activer étant réalisé de manière à

activer le commutateur (106) en réaction au cycle de fonctionnement (1117) de sorte que le commutateur de charge (106) soit fermé, et

ouvrir le commutateur (106) en réaction à un signal de sortie de comparateur (1114) lorsque le comparateur (1113) constate le rapport prédéterminé.

17. Programme d'ordinateur avec un code de programme pour réaliser le procédé selon la revendication 16 lorsque le programme se déroule sur un ordinateur.

18. Régulateur à découpage aux caractéristiques suivantes :

un commutateur de charge (106) ;

un réseau (101) avec une inductance (100), une capacité de filtrage (102) et une diode (104), à la capacité de filtrage pouvant être sortie une tension de sortie ($U_{SR}$), réglée par la commande du commutateur de charge (106), entre un premier noeud de sortie (114) et un deuxième noeud de sortie (116) du régulateur à découpage, le régulateur à découpage ayant, par ailleurs, un premier noeud d'entrée (110) et un deuxième noeud d'entrée (112), entre le premier noeud d'entrée (110) et le deuxième noeud d'entrée (112) étant connectés en série le commutateur de charge et le réseau, et le noeud (118, 116) auquel le commutateur de charge est couplé au réseau étant court-circuité avec un noeud de sortie (114, 116),

un générateur de cycles d'horloge (1116) destiné à mettre à disposition un cycle de fonctionnement ;

un dispositif (1111) destiné à détecter la tension de sortie, pour générer un signal de détection de tension de sortie ;

un dispositif (1112) destiné à détecter un courant passant par l'inductance (100), pour obtenir un signal de détection de courant,

le dispositif (1111) destiné à détecter la tension de sortie ou le dispositif (1112) destiné à détecter le courant passant par l'inductance étant réalisé de manière à générer le signal de détection de sorte qu'il ait, par rapport à une évolution dans le temps d'une grandeur à détecter, une évolution dans le temps inversée, de sorte que, à signal à détecter montant, le signal de détection tombe, et inversement,

un comparateur (1114) destiné à comparer le signal de détection de courant (1118) et le signal de détection de tension (1119), pour constater s'il est présent un rapport prédéterminé entre le signal de détection de courant (1118) et le signal de détection de tension (1119) ; et

un dispositif (1115) destiné à activer le commutateur de charge (106) par un signal de commande (1120), le dispositif destiné à activer étant réalisé de manière à

activer le commutateur (106) en réaction au cycle de fonctionnement (1117) de sorte que le commutateur de charge (106) soit fermé, et

ouvrir le commutateur (106) en réaction à un signal de sortie de comparateur (1114) lorsque le comparateur (1113) constate le rapport prédéterminé.

FIG. 1

110

EIN/
AUS

14

12  $R_i$

$U_0$  10

106

107

113

KOPPLUNG
FÜR STEUER-
POTENTIAL

101

NETZWERK MIT
SPULE, KONDENSATOR, DIODE,
(SHUNT-WIDERSTAND ETC.)

POS. AS

114

109

$U_{SR}$

NEG. AS

116

STEUERUNG

111

112

FIG. 2

FIG. 3a

FIG. 3b

110

EIN/
AUS

14

106

107

113

KOPPLUNG
FÜR STEUER-
POTENTIAL

12  R$_i$

10  U$_0$

101

NETZWERK MIT
SPULE, KONDENSATOR, DIODE,
(SHUNT-WIEDERSTAND ETC.)

POS. AS

114

109

U$_{SR}$

NEG. AS

116

112

119

1120

1115

STEUER-
SIGNAL

1111

AUSGANGSSPAN-
NUNGSERFASSUNG

1119

SPG.-
ERF.-
SIGN.

KOMPA-
RATOR
(VORBEST.
BEZ.?)

1114

SCH.
AUF

SCHALTER-
ANSTEUE-
RUNG

1110

1112

INDUKTIVITÄTS-
STROMERFASSUNG

1118

STROM-
ERF.-
SIGN.

1117  SCHALTER
ZU

111

TAKT-
GEBER

1113

1116

FIG. 4

POS. A.-SCHIENE

$U_A$

NEG. A.-SCHIENE

$GND_A$

$U_{st}$

1120

1115

$U_{SR}$

S Q

R

1117

$\Phi$

$U_{SR}$

1114

$U_k$

1113

K

+  −

1119

$U_{Aa}$

1118

$U_{Da}$

11113

R3

$U_{SR}$

11112

OV2

+  −

$U_{SR}$

11122

OV1

+  −

11121

R1

11110

R4

11111

R5

11123

$U_{ref}$

114

$U_{SR}$

116

11120

R2

$i_{R2}$

101

$R_{sh}$

$i_{Rsh}$

103

$I_D$

100

102

$C_S$

118

$U_{st}$

110

106

10, 12

104

$U_0$

K   A

112

$U_{Aa}$: SPANNUNGSERFASSUNGSSIGNAL
$U_{Da}$: STROMERFASSUNGSSIGNAL

FIG. 5

30

FIG. 6

| S | R | Q |
|---|---|---|
| 0 | 0 | $Q_{n-1}$ |
| 0 | 1 | 0 |
| 1 | 0 | 1 |
| 1 | 1 | 0 |

Q: 0 ≙ SCHALTER „AUF"
(KEINE LADUNG VON
$C_S$ DURCH $U_0$)

Q: 1 ≙ SCHALTER „ZU"
(LADUNG VON
$C_S$ DURCH $U_0$)

FIG. 7

FIG. 8
(STAND DER TECHNIK)